# EUROPÄISCHE PATENTSCHRIFT

(11) **EP 3 298 079 B1**
(45) Veröffentlichungstag und Bekanntmachung des Hinweises auf die Patenterteilung: **23.01.2019**
(21) Anmeldenummer: 16725402.8
(22) Anmeldetag: 12.05.2016
(51) Int. Cl.: C08L 25/12, C08L 55/02, C08F 279/04

(54) **ABS-FORMMASSE MIT GUTER EIGENSCHAFTSKOMBINATION VON VERARBEITBARKEIT UND OBERFLÄCHENQUALITÄT**
ABS MOLDING COMPOUND HAVING A GOOD PROPERTY COMBINATION OF PROCESSABILITY AND SURFACE QUALITY
MATIÈRE À MOULER À BASE D'ABS PRÉSENTANT UNE BONNE ASSOCIATION DE PROPRIÉTÉS EN TERMES D'APTITUDE AU FAÇONNAGE ET DE QUALITÉ DE SURFACE

(30) Priorität: 18.05.2015 EP 15167936
(43) Veröffentlichungstag der Anmeldung: 28.03.2018
(73) Patentinhaber: INEOS Styrolution Group GmbH, 60325 Frankfurt (DE)
(72) Erfinder: MICHELS, Gisbert, 51375 Leverkusen (DE)
(74) Vertreter: Jacobi, Markus Alexander
(86) Internationale Anmeldenummer: PCT/EP2016/060620
(87) Internationale Veröffentlichungsnummer: WO 2016/184765

(56) Entgegenhaltungen:
- EP-A1- 1 567 596
- EP-A2- 0 328 960

## Beschreibung

Die vorliegende Erfindung betrifft thermoplastische Formmassen F, die mindestens zwei Pfropfkautschuke P-I und P-II enthalten, die durch Cofällung einer Mischung der jeweiligen Emulsionen, enthaltend P-I und P-II, aufgearbeitet werden. Ferner umfasst die vorliegende Erfindung ein Verfahren zum Herstellen solcher thermoplastischer Formmassen F, sowie Formkörper, die aus einer erfindungsgemäßen thermoplastischen Formmasse F erhältlich sind, bzw. erhalten werden.

Seit Jahren werden Acrylnitril-Butadien-Styrol-Copolymere (ABS) und Formmassen des ABS-Typs, die noch weitere Comonomere (als Bausteine) und/oder weitere thermoplastische Komponenten enthalten können, regelmäßig als thermoplastische Formmassen für die Herstellung von Formteilen für unterschiedliche Anwendungen verwendet. Das Eigenschaftsspektrum dieser thermoplastischen Formmassen kann in weiten Bereichen variiert werden. Besonders interessant für viele Anwendungen ist, dass derartige Formmassen eine besonders hohe Zähigkeit (etwa Schlagzähigkeit und/oder Kerbschlagzähigkeit) aufweisen. Zudem ist die gute Verarbeitbarkeit (thermoplastische Fließfähigkeit, MVR), Wärmeformbeständigkeit, Oberflächenglanz und Oberflächenhomogenität, und somit die Erreichbarkeit einer vergleichsweise "stippenarmen" Qualität gewünscht.

Diese Eigenschaften können nach Bedarf variiert und angepasst werden. Für die verschiedenen Einsatzbereiche ist es wünschenswert, Formmassen mit den jeweils besonders vorteilhaften Eigenschaftskombinationen bereitzustellen. Zudem besteht ein Bedürfnis, die Herstellungsverfahren, insbesondere für ABS-Produkte, grundsätzlich zu verbessern. Häufig wird bei bisherigen Verfahren zur Verbesserung einer Eigenschaft die Verschlechterung einer oder mehrerer der anderen Eigenschaften in Kauf genommen.

So werden etwa in WO 2001/62848 ABS-Formmassen beschrieben, die mindestens drei Pfropfkautschuke enthalten. Diese Formmassen weisen eine vergleichsweise gute Zähigkeit und Verarbeitbarkeit auf. Die Oberflächenhomogenität derartiger Formmassen bzw. der Formteile stellt sich jedoch als nicht zufriedenstellend dar.

In EP-A 1 567 596 werden co-gefällte Pfropfkautschuke einheitlicher Größe gelehrt, die zu einer gewünschten Oberflächenqualität führen. Hierbei muss jedoch eine Redox-Initiierung zur Herstellung eines Pfropfkautschuks angewandt werden. Zudem sind die Zähigkeiten und die Verarbeitbarkeit der Formmassen verbesserungswürdig.

EP-A 0 328 960 lehrt ABS-Formmassen mit reduziertem Oberflächenglanz und hoher Zähigkeit, die separat gefällte Latexkomponenten enthalten.

Es besteht daher ein Bedürfnis, eine einfach herzustellende thermoplastische Formmasse mit positiven Eigenschaften sowohl bezüglich der Zähigkeit und Verarbeitbarkeit als auch der Oberflächenqualität bereitzustellen.

Überraschend wurde gefunden, dass eine thermoplastische Formmasse, die co-gefällte, unterschiedliche Pfropfkautschuke aufweist, derartige positive Eigenschaften hat, und zudem vergleichsweise einfach herzustellen ist. Es ist dabei überraschend, dass die im Folgenden beschriebene erfindungsgemäße thermoplastische Formmasse F, die co-gefällte Pfropfkautschuke P-I und P-II (die bevorzugt mit ausschließlicher Persulfat-Initiierung enthalten werden), gute Kerbschlagzähigkeit und Schlagzähigkeit und zudem bessere Oberflächenhomogenität bei ansonsten vergleichbaren Eigenschaften aufweist als eine vergleichbare Formmasse aus WO 2001/62848.

Ein erster Aspekt der vorliegenden Erfindung betrifft eine thermoplastische Formmasse F enthaltend (oder bestehend aus):
I) mindestens einen Pfropfkautschuk P-I erhalten durch Emulsionspolymerisation mit anorganischer Persalz-Initiierung (Initiierung unter Einsatz eines Salzes einer Peroxosäure) und Polymerisation von Styrol und Acrylnitril im Gewichtsverhältnis Styrol:Acrylnitril von 95:5 bis 50:50, wobei Styrol ganz oder teilweise ersetzt werden kann durch alpha-Methylstyrol, und wobei
   Acrylnitril ganz oder teilweise ersetzt werden kann durch Methylmethacrylat oder N-Phenylmaleinimid in Gegenwart von:
   mindestens einem Polybutadienlatex A mit einem mittleren Teilchendurchmesser d₅₀ von 230 bis 330 nm und mindestens einem Polybutadienlatex B mit einem mittleren Teilchendurchmesser d₅₀ von 340 bis 480 nm,
   wobei die Polybutadienlatices A und B mittels Saatpolymerisation ausgehend von einem Polybutadienlatex C mit einem mittleren Teilchendurchmesser d₅₀ von 10 bis 220 nm (als Saatlatex) erhalten wurden;
II) mindestens ein Pfropfkautschuk P-II erhalten durch Emulsionspolymerisation mit anorganischer Persalz-Initiierung und Polymerisation von Styrol und Acrylnitril im Gewichtsverhältnis Styrol:Acrylnitril von 95:5 bis 50:50, wobei Styrol ganz oder teilweise ersetzt werden kann durch alpha-Methylstyrol, und wobei Acrylnitril ganz oder teilweise ersetzt werden kann durch Methylmethacrylat oder N-Phenylmaleinimid, in Gegenwart des Polybutadienlatex C mit einem mittleren Teilchendurchmesser d₅₀ von 10 bis 220 nm;
III) mindestens eine kautschukfreie Copolymer-Matrix P-III aus Styrol und Acrylnitril im Gewichtsverhältnis Styrol:Acrylnitril von 95:5 bis 50:50, wobei Styrol ganz oder teilweise ersetzt werden kann durch alpha-Methylstyrol,
IV) optional ein oder mehrere, nicht aus Vinylmonomeren aufgebaute thermoplastische Komponenten T; und
V) optional ein oder mehrere Additive D,
wobei die Pfropfkautschuke P-I und P-II durch Cofällung einer Mischung der jeweiligen Emulsionen (bzw. Latices) enthaltend P-I und P-II aufgearbeitet werden (bzw. wurden).

Besonders bevorzugt besteht die thermoplastische Formmasse F aus den vorstehend genannten Komponenten I) bis III) und optional I) und V).

Die erfindungsgemäße thermoplastische Formmasse F ist insbesondere dadurch gekennzeichnet, dass die Pfropfkautschuke P-I und P-II durch anorganische Persalz-Initiierung hergestellt und durch Cofällung nach Mischen der die Pfropfkautschuke P-I und P-II enthaltenen Emulsionen aufgearbeitet werden.

Ein bevorzugtes Ausführungsbespiel für eine thermoplastische Formmasse F im Sinne der vorliegenden Erfindung ist auch dem untenstehenden experimentellen Beispielteil zu entnehmen. Dies betrifft auch die Teilkomponenten der hierin gezeigten thermoplastischen Formmasse F.

Bevorzugt wird die thermoplastische Formmasse F nach einem wie hierin beschriebenen Verfahren hergestellt. Die thermoplastische Formmasse F kann auch als Polymerzusammensetzung bezeichnet werden.

Die Begriffe "Pfropfkautschuk", "Pfropfkautschukpolymerisat" und "Pfropfkautschukpolymer" sind hierbei im weitesten Sinne synonym zu verstehen als Pfropfpolymer mit einem Kern aus Polybutadienlatex und einer zu mindestens 50 Gew.-% aus thermoplastischem Material bestehenden Pfropfhülle.

Ebenso sind hier die Begriffe "Butadienlatex", "Polybutadienlatex", "Butadienpolymerlatex" und "Butadienpolymeratlatex" im weitesten Sinne synonym zu verstehen als partikuläre Partikel, die hauptsächlich, daher zu mindestens 50 Gew.-% aus Butadien-Einheiten bestehen.

Gewichtsangaben, Angaben und Definitionen von Gewichtsverhältnissen, Angaben in Gewichtsprozent (Gew.-%) und Angaben in Gewichtsteilen (Gew.-Teilen) beziehen sich in der gesamten Anmeldung allgemein auf die jeweiligen Gewichte der Trockensubstanz (gerechnet als Feststoff), daher ohne enthaltene bzw. aufgesogene Flüssigkeiten (z.B. Wasser, Elektrolytlösung und ungebundene Monomere). "Gewichtsverhältnis" und "Masseverhältnis" sind synonym zu verstehen.

Wie hierin verwendet, sollen die Angaben in Gewichtsprozent (Gew.-%) so verstanden werden, dass die gesamte Zusammensetzung stets 100 Gew.-% beträgt. Wenn eine Zusammensetzung einen bestimmten Anteil einer oder mehrerer Komponente(n) umfasst oder enthält, beträgt der Anteil an einer oder mehrerer anderer/anderen nicht-genannten Komponente(n) folglich 100 Gew.-% abzüglich (minus) des Anteil der einen oder mehreren genannten Komponente(n). Wenn eine Zusammensetzung aus bestimmten Komponenten besteht, beträgt der Anteil dieser Komponenten in der Summe 100 Gew.-%. Der Fachmann wird leicht ermitteln, wie die restlichen Komponenten bei der Vorgabe des Anteils anderer Komponenten sein können.

Wie hierin verwendet kann die Bestimmung der mittleren Teilchendurchmesser d₅₀ durch Ultrazentrifugenmessung ermittelt werden (vgl. W. Scholtan, H. Lange: Kolloid Z. u. Z. Polymere 250, S. 782 bis 796 (1972)).

Gemäß einer bevorzugten Ausführungsform wird bei der thermoplastischen Formmasse F der Pfropfkautschuk P-I durch Emulsionspolymerisation von Styrol und Acrylnitril im Gewichtsverhältnis von 80:20 bis 65:35 auf die Polybutadienlatices A und B erhalten. Bevorzugt beträgt das Styrol:Acrylnitril-Gewichtsverhältnis 70:30 bis 75:25.

Ein Ausführungsbespiel eines Pfropfkautschuks P-I ist auch dem untenstehenden experimentellen Beispielteil zu entnehmen. Es wird allgemein vom Fachmann verstanden werden, dass mit "Styrol", "Acrylnitril", "Butadien" usw. die in die jeweilige (Co)polymer-Struktur eingebetteten Einheiten gemeint sind.

Gemäß einer bevorzugten Ausführungsform wird bei der thermoplastischen Formmasse F der Pfropfkautschuk P-II durch Emulsionspolymerisation von Styrol und Acrylnitril im Gewichtsverhältnis von 80:20 bis 65:35 auf den Polybutadienlatex C erhalten. Besonders bevorzugt beträgt das Styrol:Acrylnitril-Gewichtsverhältnis 70:30 bis 75:25.

Ein bevorzugtes Ausführungsbespiel eines Pfropfkautschuks P-II ist auch dem untenstehenden experimentellen Beispielteil zu entnehmen.

Gemäß einer bevorzugten Ausführungsform ist bei der thermoplastischen Formmasse F die kautschukfreie Copolymer-Matrix P-III ein Styrol-Acrylnitril-Copolymer im Gewichtsverhältnis von 80:20 bis 65:35. Besonders bevorzugt ist bei der thermoplastischen Formmasse F die kautschukfreie Copolymer-Matrix P-III ein Styrol-Acrylnitril-Copolymer im Styrol:Acrylnitril-Gewichtsverhältnis von 70:30 bis 75:25.

Bevorzugt wird bei der thermoplastischen Formmasse F der Pfropfkautschuk P-I durch Emulsionspolymerisation von Styrol und Acrylnitril im Styrol:Acrylnitril-Gewichtsverhältnis von 80:20 bis 65:35 auf die Polybutadienlatices A und B erhalten und der Pfropfkautschuk P-II durch Emulsionspolymerisation von Styrol und Acrylnitril im Styrol:Acrylnitril-Gewichtsverhältnis von 80:20 bis 65:35 auf den Polybutadienlatex C erhalten.

Besonders bevorzugt wird bei der thermoplastischen Formmasse F der Pfropfkautschuk P-I durch Emulsionspolymerisation von Styrol und Acrylnitril im Gewichtsverhältnis von 80:20 bis 65:35 auf die Polybutadienlatices A und B erhalten; der Pfropfkautschuk P-II durch Emulsionspolymerisation von Styrol und Acrylnitril im Gewichtsverhältnis von 80:20 bis 65:35 auf den Polybutadienlatex C erhalten; und
ist die kautschukfreie Copolymer-Matrix P-III ein Styrol-Acrylnitril-Copolymer im Gewichtsverhältnis von 80:20 bis 65:35. Ein bevorzugtes Ausführungsbespiel eines kautschukfreien Copolymers P-III ist auch dem untenstehenden experimentellen Beispielteil zu entnehmen.

Wie oben dargelegt, kommen als kautschukfreie Copolymer-Matrix P-III hauptsächlich Copolymere aus Styrol und Acrylnitril im Gewichtsverhältnis Styrol:Acrylnitril von 95:5 bis 50:50 in Frage, wobei Styrol und/oder Acrylnitril ganz oder teilweise ersetzt werden kann (durch alpha-Methylstyrol, Methylmethacrylat, N-Phenylmaleinimid oder Mischungen hieraus). Bevorzugt sind kautschukfreie Copolymere P-III mit Anteilen an copolymerisierten AcrylnitrilEinheiten < 30 Gew.-%. Die kautschukfreien Copolymere P-III besitzen vorzugsweise mittlere Molekulargewichte M_{w} von 20.000 bis 200.000 und/oder Grenzviskositäten [η] von 20 bis 110 ml/g (gemessen in Dimethylformamid bei 25°C). Einzelheiten zur Herstellung derartiger kautschukfreier Copolymere P-III sind beispielsweise in DE-A 24 20 358 und der DE-A 27 24 360 beschrieben. Ebenso sind beispielhaft derartige kautschukfreie Copolymere P-III auch in DE-A 1 971 3509 beschrieben, wobei die Copolymere P-III sowohl durch rein thermische Initiierung als auch durch Zusatz von Initiatoren, insbesondere Peroxide, herstellbar sind. Durch Masse- bzw. Lösungspolymerisation hergestellte Vinylharze sind besonders bevorzugt. Die Copolymere können allein oder in beliebiger Mischung zugesetzt werden.

Außer aus Vinylmonomeren aufgebauten thermoplastischen Komponenten ist auch die Verwendung von Polykondensaten, wie beispielsweise aromatischen Polycarbonaten, aromatischen Polyestercarbonaten, Polyestern, Polyamiden als kautschukfreie Copolymer-Matrix in der Formmasse möglich. Diese werden dann als thermoplastische Komponenten T eingesetzt. Zahlreiche geeignete thermoplastische Polycarbonate und Polyestercarbonate sind bekannt (vgl. beispielsweise DE-A 14 95 626, DE-A 22 32 877, DE-A 27 03 376, DE-A 27 14 544, DE-A 30 00 610, DE-A 38 32 396, sowie insbesondere DE-A 100 08 420 und WO 2012/022710.

Wie oben dargelegt weist das Polybutadienlatex A einen mittleren Teilchendurchmesser d₅₀ von 230 bis 330 nm und einen in breiten Bereichen definierten Gelgehalt auf. Gemäß einer bevorzugten Ausführungsform weist der Polybutadienlatex A einen mittleren Teilchendurchmesser d₅₀ von 240 bis 320, insbesondere 250 bis 310 nm, auf. Gemäß einer bevorzugten Ausführungsform weist der Polybutadienlatex A einen Gelgehalt von 30 bis 80 Gew.-%, bevorzugt 40 bis 75 Gew.-%, insbesondere 45 bis 70 Gew.-%, auf.

Gemäß einer bevorzugten Ausführungsform weist bei der thermoplastischen Formmasse F der Polybutadienlatex A einen mittleren Teilchendurchmesser d₅₀ von 240 bis 320, insbesondere 250 bis 310 nm, und einen Gelgehalt von 30 bis 80 Gew.-%, bevorzugt 40 bis 75 Gew.-%, insbesondere 45 bis 70 Gew.-%, auf. Besonders bevorzugt weist bei der Polybutadienlatex A einen mittleren Teilchendurchmesser d₅₀ von 250 bis 310 nm und einen Gelgehalt von 45 bis 70 Gew.-% auf.

Ein besonders bevorzugtes Ausführungsbespiel eines Polybutadienlatex A ist auch dem untenstehenden experimentellen Beispielteil zu entnehmen.

Die angegebenen Werte für die jeweiligen Gelgehalte können durch das hierzu übliche Verfahren durch Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart) ermittelt werden. Die Gelgehalte der Polybutadienlatices A, B und C und optional weiterer Latices können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z. B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgator können übliche anionische Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von C₁₀-C₁₈-Fettsäuren, disproportionierte Abietinsäure, Emulgatoren gemäß DE-OS 36 39 904 und DE-OS 39 13 509) eingesetzt.

Wie oben dargelegt weist das Polybutadienlatex B einen mittleren Teilchendurchmesser d₅₀ von 340 bis 480 nm und einen beliebigen Gelgehalt auf. Gemäß einer bevorzugten Ausführungsform weist der Polybutadienlatex B einen mittleren Teilchendurchmesser d₅₀ von 350 bis 470, insbesondere 360 bis 460 nm, auf. Gemäß einer bevorzugten Ausführungsform weist der Polybutadienlatex B einen Gelgehalt von 50 bis 95 Gew.-%, insbesondere 55 bis 90 Gew.-%, auf.

Gemäß einer stärker bevorzugten Ausführungsform weist der Polybutadienlatex B einen mittleren Teilchendurchmesser d₅₀ von 350 bis 470, insbesondere 360 bis 460 nm, und einen Gelgehalt von 50 bis 95 Gew.-%, insbesondere 55 bis 90 Gew.-%, auf. Besonders bevorzugt weist der Polybutadienlatex B einen mittleren Teilchendurchmesser d₅₀ von 360 bis 460 nm und einen Gelgehalt von 55 bis 90 Gew.-% auf.

Ein bevorzugtes Ausführungsbespiel eines Polybutadienlatex B ist auch dem untenstehenden experimentellen Beispielteil zu entnehmen.

Wie oben dargelegt weist das Polybutadienlatex C einen mittleren Teilchendurchmesser d₅₀ von 10 bis 220 nm und einen beliebigen Gelgehalt auf. Gemäß einer bevorzugten Ausführungsform weist der Polybutadienlatex C einen mittleren Teilchendurchmesser d₅₀ von 20 bis 210 nm, insbesondere 30 bis 200 nm, auf. Gemäß einer bevorzugten Ausführungsform weist der Polybutadienlatex C einen Gelgehalt von 30 bis 98 Gew.-%, bevorzugt 40 bis 95 Gew.-%, insbesondere 50 bis 92 Gew.-%, auf. Gemäß einer bevorzugten Ausführungsform weist der Polybutadienlatex C einen mittleren Teilchendurchmesser d₅₀ von 20 bis 210 nm, insbesondere 30 bis 200 nm, und einen Gelgehalt von 30 bis 98 Gew.-%, bevorzugt 40 bis 95 Gew.-%, insbesondere 50 bis 92 Gew.-%, auf.
Besonders bevorzugt weist der Polybutadienlatex C einen mittleren Teilchendurchmesser d₅₀ von 30 bis 200 nm und einen Gelgehalt von 50 bis 92 Gew.-% auf.

Besonders bevorzugt weist der Polybutadienlatex C einen mittleren Teilchendurchmesser d₅₀ von 30 bis 200 nm und einen Gelgehalt von 50 bis 92 Gew.-% auf. Bei Verwendung von Polybutadienlatex C mit mittleren Teilchendurchmessern d₅₀ oberhalb 80 nm, vorzugsweise oberhalb 90 nm und besonders bevorzugt oberhalb 100 nm wird auch dieses Polybutadienlatex C selbst vorzugsweise durch Saatpolymerisation hergestellt. Dazu werden vorzugsweise ein Polybutadienlatex mit einem mittleren Teilchendurchmessern d₅₀ von 10 bis 60 nm, vorzugsweise 20 bis 50 nm, eingesetzt. Der hierzu verwendbare Saatlatex (vorzugsweise ein Polybutadienlatex) besitzt bevorzugt einen mittleren Teilchendurchmesser d₅₀ von 10 bis 60 nm, vorzugsweise 20 bis 50 nm. Der Gelgehalt von der kleinen Saatlatex-Komponente beträgt 10 bis 95 Gew.-%, vorzugsweise 20 bis 90 Gew.-% und besonders bevorzugt 30 bis 85 Gew.-%. Ein bevorzugtes Ausführungsbespiel eines Polybutadienlatex C ist auch dem untenstehenden experimentellen Beispielteil zu entnehmen.

Die Polybutadienlatices A, B und C können nach einem beliebigen, im Stand der Technik bekannten Verfahren hergestellt werden. Bevorzugt werden die Polybutadienlatices A, B und C jeweils (unabhängig voneinander) durch Emulsionspolymerisation von Butadien-Einheiten (und gegebenenfalls weiterer Komponenten) nach der sogenannten Saatpolymerisationstechnik hergestellt, bei der zunächst ein feinteiliges Polymerisat, vorzugsweise ein Polybutadienpolymer, als Saatlatex hergestellt und dann durch Weiterumsatz mit Butadien-Monomere umfassenden Monomeren zu größeren Teilchen weiterpolymerisiert wird (siehe z. B. in Houben-Weyl, Methoden der Organischen Chemie, Makromolekulare Stoffe Teil 1, S. 339 (1961), Thieme Verlag Stuttgart). Dabei wird vorzugsweise unter Verwendung des Saat-Batch-Verfahrens oder Verwendung des Saat-Zulauf-Verfahrens gearbeitet.

Als Saatlatexpolymere zur Herstellung der Polybutadienlatices A, B und/oder C werden vorzugsweise Polybutadienpolymere (beispielsweise Polybutadien, Butadien/Styrol-Copolymere, Butadien/Acrylnitril-Copolymere oder optional quervernetzte (Co)polymere aus den oben genannten Monomeren) eingesetzt. Im Prinzip können auch andere feinteilige Latexpolymere wie beispielsweise Polystyrol oder Styrol-Copolymere, Polymethylmethacrylat oder Methylmethacrylat-Copolymere sowie Polymere anderer Vinylmonomere verwendet werden. Bevorzugte Saatlatexpolymere sind Latices mit einem Polybutadien-Gehalt von mindestens 50 Gew.-%.

Gemäß einer bevorzugten Ausführungsform umfasst das Polybutadienlatex A:
50 bis 100 Gew.-%, bevorzugt 80 bis 100 Gew.-%, insbesondere 90 bis 100 Gew.-%, Polybutadien; und 0 bis 50 Gew.-%, bevorzugt 0 bis 20 Gew.-%, insbesondere bevorzugt 0 bis 10 Gew.-%, von mit Butadien copolymerisierbaren Monomeren (daher Co-Monomeren), bevorzugt Monomeren ausgewählt aus der Gruppe bestehend aus:
Styrol, Acrylnitril, Isopren, Chloropren, alpha-Methylstyrol, C₁-₄-Alkylstyrole, C₁₋₈-Alkylacrylate, C₁₋₈-Alkylmethacrylate, Alkylenglykoldiacrylate, Alkylenglykoldimethacrylate, Divinylbenzol und Kombinationen aus zwei oder mehr davon, insbesondere Styrol und/oder Acrylnitril.

Besonders bevorzugt umfasst das Polybutadienlatex A:
90 bis 100 Gew.-%, Polybutadien; und
0 bis 10 Gew.-%, mit dem Butadien copolymerisiertes Styrol und/oder Acrylnitril.

Ein bevorzugtes Ausführungsbespiel der Zusammensetzung eines Polybutadienlatex A ist auch dem untenstehenden experimentellen Beispielteil zu entnehmen.

Gemäß einer bevorzugten Ausführungsform umfasst das Polybutadienlatex B:
50 bis 100 Gew.-%, bevorzugt 80 bis 100 Gew.-%, insbesondere 90 bis 100 Gew.-%, Polybutadien; und 0 bis 50 Gew.-%, bevorzugt 0 bis 20 Gew.-%, insbesondere bevorzugt 0 bis 10 Gew.-%, von mit Butadien copolymerisierbaren Monomeren (daher Co-Monomeren), bevorzugt Monomeren ausgewählt aus der Gruppe bestehend aus Styrol, Acrylnitril, Isopren, Chloropren, alpha-Methylstyrol, C₁-₄-Alkylstyrole, C₁₋₈-Alkylacrylate, C₁₋₈-Alkylmethacrylate, Alkylenglykoldiacrylate, Alkylenglykoldimethacrylate, Divinylbenzol und Kombinationen aus zwei oder mehr davon, insbesondere Styrol und/oder Acrylnitril.

Besonders bevorzugt umfasst (enthält) das Polybutadienlatex B:
90 bis 100 Gew.-% Polybutadien; und 0 bis 10 Gew.-%, mit dem Butadien copolymerisiertes Styrol und/oder Acrylnitril.

Ein besonders bevorzugtes Ausführungsbespiel der Zusammensetzung eines Polybutadienlatex B ist auch dem untenstehenden experimentellen Beispielteil zu entnehmen.

Ebenso umfasst, gemäß einer bevorzugten Ausführungsform, das Polybutadienlatex C:
50 bis 100 Gew.-%, bevorzugt 80 bis 100 Gew.-%, insbesondere 90 bis 100 Gew.-%, Polybutadien; und
0 bis 50 Gew.-%, bevorzugt 0 bis 20 Gew.-%, insbesondere bevorzugt 0 bis 10 Gew.-%, von mit Butadien copolymerisierbaren Monomeren (daher Co-Monomeren), bevorzugt Monomeren ausgewählt aus der Gruppe bestehend aus Styrol, Acrylnitril, Isopren, Chloropren, alpha-Methylstyrol, C₁-₄-Alkylstyrole, C₁₋₈-Alkylacrylate, C₁₋₈-Alkylmethacrylate, Alkylenglykoldiacrylate, Alkylenglykoldimethacrylate, Divinylbenzol und Kombinationen aus zwei oder mehr davon, insbesondere Styrol und/oder Acrylnitril.

Besonders bevorzugt umfasst das Polybutadienlatex C:
90 bis 100 Gew.-%, Polybutadien; und
0 bis 10 Gew.-%, mit dem Butadien copolymerisiertes Styrol und/oder Acrylnitril.

Ein besonders bevorzugtes Ausführungsbespiel der Zusammensetzung eines Polybutadienlatex C ist auch dem untenstehenden experimentellen Beispielteil zu entnehmen.

Gemäß einer bevorzugten Ausführungsform sind die Polybutadienlatices A, B und C jeweils (unabhängig voneinander) aufgebaut aus:
50 bis 100 Gew.-%, bevorzugt 80 bis 100 Gew.-%, insbesondere 90 bis 99 Gew.-%, Polybutadien; und 0 bis 50 Gew.-%, bevorzugt 0 bis 20 Gew.-%, insbesondere 1 bis 10 Gew.-%, von mit Butadien copolymerisierbaren Monomeren, bevorzugt Monomeren ausgewählt aus der Gruppe bestehend aus Styrol, Acrylnitril, Isopren, Chloropren, alpha-Methylstyrol, C₁-₄-Alkylstyrole, C₁₋₈-Alkylacrylate, C₁₋₈-Alkylmethacrylate, Alkylenglykoldiacrylate, Alkylenglykoldimethacrylate, Divinylbenzol und Kombinationen aus zwei oder mehr der genannten Monomere, insbesondere Styrol und/oder Acrylnitril.

Besonders bevorzugt umfassen die die Polybutadienlatices A, B und C jeweils (unabhängig voneinander): 90 bis 100 Gew.-% Polybutadien; und
0 bis 10 Gew.-%, mit dem Butadien copolymerisiertes Styrol und/oder Acrylnitril.

Besonders bevorzugte aber nicht limitierende Ausführungsbespiele für die Zusammensetzung der Polybutadienlatices A, B und C sind auch dem untenstehenden experimentellen Beispielteil zu entnehmen.

Wie oben ersichtlich ist, wird zur Herstellung des Polybutadienlatex A und des Polybutadienlatex B als Saatlatices bevorzugt jeweils (unabhängig voneinander) Polybutadienlatex C mit einem mittleren Teilchendurchmesser d₅₀ von 10 bis 220 nm, vorzugsweise 20 bis 210 nm und besonders bevorzugt 30 bis 200 nm eingesetzt.

Das Gewichtsverhältnis der Feststoffe der Polybutadienlatices A und B zueinander kann in weiten Grenzen variiert werden. Grundsätzlich sind beliebige Gewichtsverhältnisse möglich.

Gemäß einer bevorzugten Ausführungsform beträgt das Gewichtsverhältnis der Feststoffe der Polybutadienlatices A:B von 90:10 bis 10:90, bevorzugt 80:20 bis 20:80, insbesondere 60:40 bis 40:60.

In diesem Zusammenhang bezieht sich das Gewichtsverhältnis auf die Feststoffe der Polybutadienlatices. Diese können etwa gravimetrisch nach Trocknung (etwa bei 50 bis 150°C für 5 bis 60 min, beispielsweise bei 180°C für beispielsweise 23 Minuten in einem Umlufttrockenschrank) ermittelt werden.

Ein bevorzugtes Ausführungsbespiel für das Gewichtsverhältnis der Feststoffe der Polybutadienlatices A:B ist auch dem untenstehenden experimentellen Beispielteil zu entnehmen.

Auch das Gewichtsverhältnis der der Pfropfkautschuke P-I und P-II zueinander kann in weiten Grenzen variiert werden. Grundsätzlich sind beliebige Gewichtsverhältnisse möglich.

Gemäß einer bevorzugten Ausführungsform beträgt das Gewichtsverhältnis der Pfropfkautschuke P-I:P-II von 90:10 bis 10:90, bevorzugt 80:20 bis 20:80, insbesondere 70:30 bis 35:65. Besonders bevorzugt beträgt das Gewichtsverhältnis der Pfropfkautschuke P-I:P-II 55:45 bis 60:40.

Auch in diesem Zusammenhang bezieht sich das Gewichtsverhältnis auf die Feststoffe der Polybutadienlatices. Diese können etwa gravimetrisch nach Trocknung (etwa bei einer Temperatur von 100 bis 200°C für 5 bis 60 min, beispielsweise bei 180°C für beispielsweise 23 Minuten in einem Umlufttrockenschrank) ermittelt werden.

Ein besonders bevorzugtes Ausführungsbespiel für das Gewichtsverhältnis der Feststoffe der Polybutadienlatices P-I:P-II ist auch dem untenstehenden experimentellen Beispielteil zu entnehmen.

Gemäß einer bevorzugten Ausführungsform enthält der Pfropfkautschuk P-I oder besteht aus: 15 bis 60 Gew.-%, insbesondere 20 bis 50 Gew.-%, Styrol und Acrylnitril im Styrol:Acrylnitril-Gewichtsverhältnis von 95:5 bis 50:50, wobei Styrol und/oder Acrylnitril ganz oder teilweise ersetzt werden kann durch alpha-Methylstyrol, Methylmethacrylat, N-Phenylmaleinimid oder Mischungen hieraus; und 40 bis 85 Gew.-%, insbesondere 50 bis 80 Gew.-%, der Polybutadienlatices A und B.

Besonders bevorzugt besteht der Pfropfkautschuk P-I aus:
20 bis 50 Gew.-% Styrol und Acrylnitril im Styrol:Acrylnitril-Gewichtsverhältnis von 80:20 bis 65:35; und 50 bis 80 Gew.-% an Polybutadienlatices A und B.

Besonders bevorzugt besteht der Pfropfkautschuk P-I aus:
20 bis 50 Gew.-%, Styrol und Acrylnitril im Styrol:Acrylnitril-Gewichtsverhältnis von 80:20 bis 65:35; und 50 bis 80 Gew.-% an Polybutadienlatices A und B, wobei Gewichtsverhältnis der Feststoffe der Polybutadienlatices A:B 60:40 bis 40:60 beträgt.

Ein bevorzugtes Ausführungsbespiel für die Zusammensetzung des Pfropfkautschuks P-I ist auch dem untenstehenden experimentellen Beispielteil zu entnehmen.

Ebenso enthält der Pfropfkautschuk P-II bevorzugt oder besteht der Pfropfkautschuke P-II aus:
15 bis 60 Gew.-%, insbesondere 20 bis 50 Gew.-%, Styrol und Acrylnitril im Styrol:Acrylnitril-Gewichtsverhältnis von 95:5 bis 50:50, wobei Styrol und/oder Acrylnitril ganz oder teilweise ersetzt werden kann durch alpha-Methylstyrol, Methylmethacrylat, N-Phenylmaleinimid oder Mischungen hieraus; und 40 bis 85 Gew.-%, insbesondere 50 bis 80 Gew.-%, an Polybutadienlatex C.

Besonders bevorzugt besteht der Pfropfkautschuk P-II aus:
20 bis 50 Gew.-%, Styrol und Acrylnitril im Styrol:Acrylnitril-Gewichtsverhältnis von 80:20 bis 65:35; und 50 bis 80 Gew.-% an Polybutadienlatex C.

Ein besonders bevorzugtes Ausführungsbespiel für die Zusammensetzung des Pfropfkautschuks P-II ist auch dem untenstehenden experimentellen Beispielteil zu entnehmen.

Gemäß einer bevorzugten Ausführungsform bestehen die Pfropfkautschuke P-I und P-II jeweils (unabhängig voneinander) aus:
15 bis 60 Gew.-%, insbesondere 20 bis 50 Gew.-%, Styrol und Acrylnitril im Gewichtsverhältnis von 95:5 bis 50:50, wobei Styrol ganz oder teilweise ersetzt werden kann durch alpha-Methylstyrol, und wobei Acrylnitril ganz oder teilweise ersetzt werden kann durch Methylmethacrylat oder N-Phenylmaleinimid; und 40 bis 85 Gew.-%, insbesondere 50 bis 80 Gew.-%, der Polybutadienlatices.

Bevorzugt ist hierbei das Styrol:Acrylnitril-Gewichtsverhältnis im Bereich von 80:20 bis 65:35, wobei Styrol und/oder Acrylnitril ganz oder teilweise durch copolymerisierbare Monomere, vorzugsweise durch a Methylstyrol, Methylmethacrylat oder N-Phenylmaleinimid ersetzt werden können. Prinzipiell können zusätzlich auch beliebige weitere copolymerisierbare Vinylmonomere in Mengen bis ca. 10 Gew.-% (bezogen auf Gesamtmenge der Monomeren) mitverwendet werden.

Besonders bevorzugt bestehen die Pfropfkautschuke P-I und P-II aus:
20 bis 50 Gew.-%, Styrol und Acrylnitril im Styrol:Acrylnitril-Gewichtsverhältnis von 80:20 bis 65:35; und 50 bis 80 Gew.-% an Polybutadienlatices A, B und C.

Ganz besonders bevorzugt bestehen die Pfropfkautschuke P-I und P-II aus:
20 bis 50 Gew.-%, Styrol und Acrylnitril im Styrol:Acrylnitril-Gewichtsverhältnis von 80:20 bis 65:35; und 50 bis 80 Gew.-% an Polybutadienlatices , B und C, wobei Gewichtsverhältnis der Feststoffe der Polybutadienlatices A:B 60:40 bis 40:60 beträgt.

Ein besonders bevorzugtes Ausführungsbespiel für die Zusammensetzung der Pfropfkautschuke P-I und P-II ist auch dem untenstehenden experimentellen Beispielteil zu entnehmen.

Die Pfropfkautschuke P-I und P-II werden typischerweise durch mittels Persalz-Initiierung durchgeführter Emulsionspolymerisation hergestellt. Die Persalz-Initiierung kann grundsätzlich mit beliebigen Persalzen erfolgen.

Gemäß einer bevorzugten Ausführungsform umfasst die anorganische Persalz-Initiierung jeweils (unabhängig voneinander) die Zugabe eines oder mehrerer Salze ausgewählt aus der Gruppe bestehend aus Ammoniumpersulfat, Natriumpersulfat, Kaliumpersulfat, Kaliumperphosphat, Natriumperborat oder Mischungen aus zwei oder mehr davon. Hierin sind die Begriffe "Persulfat" und "Peroxodisulfat" synonym zu verstehen. Gemäß einer bevorzugten Ausführungsform umfasst die anorganische Persalz-Initiierung jeweils (unabhängig voneinander) die Zugabe von Natrium- und/oder Kaliumpersulfat. Diese ist beispielhaft auch im untenstehenden experimentellen Beispielteil verdeutlicht.

Die thermoplastische Formmasse F kann beliebige Mengen an den an Pfropfkautschuken P-I und P-II (eingesetzt als deren co-gefällte Mischung P-I/P-II) umfassen. Bevorzugt umfasst die thermoplastische Formmasse F 1 bis 60 Gew.-Teile, insbesondere 5 bis 50 Gew.-Teile, an Gesamtmasse an Pfropfkautschuken P-I und P-II (daher der Mischung P-I/P-Il). Hierbei sind die Gew.-Teile bezogen auf 100 Gew.-Teile der Komponenten I + II + III (daher der Gesamtmasse der Pfropfkautschuke P-I und P-II (Mischung P-I/P-II) und des kautschukfreien Copolymers P-III).

Die thermoplastische Formmasse F kann beliebige Mengen an den an kautschukfreiem Copolymers P-III umfassen. Bevorzugt umfasst die thermoplastische Formmasse F 40 bis 99 Gew.-Teile, insbesondere 50 bis 95 Gew.-Teile, an kautschukfreiem Copolymers P-III. Hierbei sind die Gew.-Teile bezogen auf 100 Gew.-Teile der Komponenten I + II + III (daher der Gesamtmasse der Pfropfkautschuke P-I und P-II (Mischung P-I/P-II) und des kautschukfreien Copolymers P-III).

Stärker bevorzugt umfasst die thermoplastische Formmasse F 1 bis 60 Gew.-Teile, insbesondere 5 bis 50 Gew.-Teile, an Gesamtmasse an Pfropfkautschuken P-I und P-II (Mischung P-I/P-II) und 40 bis 99 Gew.-Teile, insbesondere 50 bis 95 Gew.-Teile, an kautschukfreiem Copolymers P-III. Hierbei sind die Gew.-Teile bevorzugt bezogen auf 100 Gew.-Teile der Komponenten I + II + III (daher der Gesamtmasse der Pfropfkautschuke P-I und P-II (Mischung P-I/P-II) und des kautschukfreien Copolymers P-III).

Die thermoplastische Formmasse F kann zudem optional beliebige Mengen an nicht aus Vinylmonomeren aufgebauten thermoplastischen Komponenten T umfassen. Bevorzugt umfasst die thermoplastische Formmasse 0 bis 1000 Gew.-Teile, bevorzugt 0 bis 700 Gew.-Teile, stärker bevorzugt 0 bis 500 Gew.-Teile, insbesondere 0 bis 100 Gew.-Teile, nicht aus Vinylmonomeren aufgebauten thermoplastischen Komponenten T. Hierbei sind die Gew.-Teile bezogen auf 100 Gew.-Teile der Komponenten I + II + III (daher der Gesamtmasse der Pfropfkautschuke P-I und P-II (Mischung P-I/P-II) und des kautschukfreien Copolymers P-III).

Die thermoplastische Formmasse F kann zudem optional beliebige Mengen an Additiven D umfassen. Bevorzugt umfasst die thermoplastische Formmasse F 0 bis 50 Gew.-Teile an Additiven D. Auch hierbei sind die Gew.-Teile bezogen auf 100 Gew.-Teile der Komponenten I + II + III (daher der Gesamtmasse der Pfropfkautschuke P-I und P-II (Mischung P-I/P-II) und des kautschukfreien Copolymers P-III).

Gemäß einer bevorzugten Ausführungsform umfasst die thermoplastische Formmasse F oder besteht die thermoplastische Formmasse F aus:
(a) 1 bis 60 Gew.-Teile(n), insbesondere 5 bis 50 Gew.-Teile(n), an Gesamtmasse an Pfropfkautschuken P-I und P-II;
(b) 40 bis 99 Gew.-Teile(n), insbesondere 50 bis 95 Gew.-Teile(n), an kautschukfreiem Copolymers P-III;
(c) 0 bis 1000 Gew.-Teile(n), bevorzugt 0 bis 700 Gew.-Teile(n), stärker bevorzugt 0 bis 500 Gew.-Teile(n), insbesondere 0 bis 100 Gew.-Teile(n), an nicht aus Vinylmonomeren aufgebauten thermoplastischen Komponenten T; und
(d) 0 bis 50 Gew.-Teile(n) an Additiven D.

Bevorzugt umfasst die thermoplastische Formmasse F oder besteht die thermoplastische Formmasse F aus:
(a) 1 bis 60 Gew.-%, insbesondere 5 bis 50 Gew.-%, an Gesamtmasse an Pfropfkautschuken P-I und P-II;
(b) 40 bis 99 Gew.-%, insbesondere 50 bis 95 Gew.-%, an kautschukfreiem Copolymers P-III;
(c) 0 bis 59 Gew.-%, bevorzugt 0 bis 50 Gew.-%, stärker bevorzugt 0 bis 25 Gew.-%, insbesondere 0 bis 10 Gew.-%, an nicht aus Vinylmonomeren aufgebauten thermoplastischen Komponenten T; und
(d) 0 bis 10 Gew.-%, bevorzugt 0 bis 5 Gew.-% an Additiven D.

Bevorzugt besteht die thermoplastische Formmasse F aus:
(a) 5 bis 50 Gew.-% an Gesamtmasse an Pfropfkautschuken P-I und P-II;
(b) 50 bis 95 Gew.-% an kautschukfreiem Copolymers P-III;
(c) 0 bis 10 Gew.-% an nicht aus Vinylmonomeren aufgebauten thermoplastischen Komponenten T; und
(d) 0 bis 5 Gew.-% an Additiven D.

Ein bevorzugtes Ausführungsbespiel für die Zusammensetzung der thermoplastischen Formmasse F ist auch dem untenstehenden experimentellen Beispielteil zu entnehmen.

Als Additive D können der thermoplastischen Formmasse F beliebige im Stand der Technik zu diesem Zweck bekannte Polymeradditive zugesetzt werden.

Beispielshaft kann ein Additiv ausgewählt sein aus der Gruppe bestehend aus Antioxidantien, UV-Stabilisatoren, Peroxidzerstörern, Antistatika, Gleitmitteln, Entformungsmitteln, Flammschutzmitteln, Füll- oder Verstärkerstoffen (Glasfasern, Kohlefasern, etc.), Farbmitteln und Kombinationen aus zwei oder mehr daraus.

Gegenstand der vorliegenden Erfindung ist weiterhin ein Verfahren zur Herstellung der erfindungsgemäßen thermoplastischen Formmasse F.

Bei einem solchen erfindungsgemäßen Verfahren werden Polybutadienlatices A und B durch Saatpolymerisation unter Verwendung von mindestens einem Polybutadienlatex C (mit bevorzugt einem mittleren Teilchendurchmesser d₅₀ von 10 bis 220 nm) als Saatlatex erhalten und der Pfropfkautschuk P-II durch Pfropfpolymerisation in Gegenwart mindestens eines für die Polybutadienlatices A und B als Saatlatex eingesetzten Polybutadienlatex C erhalten, dadurch gekennzeichnet, dass die Pfropfkautschuke P-I und P-II durch Cofällung nach Vermischen der Pfropfkautschuke P-I und P-II (daher Cofällung der Mischung P-I/P-II) hergestellt werden.

Gemäß einer bevorzugten Ausführungsform enthält die thermoplastische Formmasse F folgende Komponenten (oder besteht die die thermoplastische Formmasse F aus Formmasse F folgenden Komponenten):
I) mindestens einen Pfropfkautschuk P-I, erhalten durch Emulsionspolymerisation mit anorganischer Persalz-Initiierung und Polymerisation von Styrol und Acrylnitril im Gewichtsverhältnis Styrol:Acrylnitril von 80:20 bis 65:35 in Gegenwart von:
   mindestens einem Polybutadienlatex A mit einem mittleren Teilchendurchmesser d₅₀ von 250 bis 310 nm und einem Gelgehalt von 45 bis 70 Gew.-%, und
   mindestens einem Polybutadienlatex B mit einem mittleren Teilchendurchmesser d₅₀ von 360 bis 460 nm und einem Gelgehalt von 55 bis 90 Gew.-%,
   wobei die Polybutadienlatices A und B mittels Saatpolymerisation ausgehend von einem Polybutadienlatex C mit einem mittleren Teilchendurchmesser d₅₀ von 30 bis 200 nm und einem Gelgehalt von 50 bis 92 Gew.-% (als Saatlatex) erhalten wurden,
   wobei das Gewichtsverhältnis der Feststoffe der Polybutadienlatices A:B von 60:40 bis 40:60 beträgt;
II) mindestens ein Pfropfkautschuk P-II, erhalten durch Emulsionspolymerisation mit anorganischer Persalz-Initiierung und Polymerisation von Styrol und Acrylnitril im Gewichtsverhältnis Styrol:Acrylnitril von 80:20 bis 65:35 in Gegenwart des Polybutadienlatex C mit einem mittleren Teilchendurchmesser d₅₀ von 30 bis 200 nm und einem Gelgehalt von 50 bis 92 Gew.-%;
III) mindestens eine kautschukfreie Copolymer-Matrix P-III aus Styrol und Acrylnitril im Gewichtsverhältnis Styrol:Acrylnitril von 80:20 bis 65:35;
IV) optional ein oder mehrere, nicht aus Vinylmonomeren aufgebaute thermoplastische Komponenten T; und
V) optional ein oder mehrere Additive D,
wobei die Pfropfkautschuke P-I und P-II durch Cofällung einer Mischung der jeweiligen Emulsionen enthaltend P-I und P-II aufgearbeitet werden,
wobei der das Gewichtsverhältnis der Pfropfkautschuke P-I:P-II von 70:30 bis 35:65 beträgt, wobei bevorzugt die anorganische Persalz-Initiierung jeweils (unabhängig voneinander) die Zugabe eines oder mehrerer Salze ausgewählt aus der Gruppe bestehend aus Ammoniumpersulfat, Natriumpersulfat, Kaliumpersulfat, Kaliumperphosphat, Natriumperborat oder Mischungen aus zwei oder mehr davon, insbesondere Natrium- und/oder Kaliumpersulfat umfasst, und
wobei die Polybutadienlatices A, B und C optional jeweils (unahängig voneinander) aufgebaut sind aus:
80 bis 100 Gew.-% (insbesondere 90 bis 99 Gew.-%) Butadien; und
0 bis 20 Gew.-% (insbesondere 1 bis 10 Gew.-%) von mit Butadien copolymerisierbaren Monomeren.

Bevorzugt enthält die thermoplastische Formmasse F 2,5 bis 35 Gew.-%, insbesondere 12,5 bis 21 Gew.-%, an mindestens einem Pfropfkautschuk P-I gemäß der vorliegenden Erfindung.

Bevorzugt enthält die thermoplastische Formmasse F 2 bis 22,5 Gew-%, insbesondere 10 bis 13,5 Gew.-%, an mindestens einem Pfropfkautschuk P-II gemäß der vorliegenden Erfindung.

Bevorzugt enthält die thermoplastische Formmasse F 22,5 bis 95,5 Gew.-%, insbesondere 60,5 bis 77,5 Gew.-%, mindestens eine kautschukfreie Copolymer-Matrix P-III gemäß der vorliegenden Erfindung.

Bevorzugt enthält die thermoplastische Formmasse F nicht mehr als 10 Gew.-%, insbesondere (weitgehend) keine nicht aus Vinylmonomeren aufgebauten thermoplastischen Komponenten T.

Bevorzugt enthält die thermoplastische Formmasse F nicht mehr als 10 Gew.-%, insbesondere nicht mehr als 5 Gew.-% oder (weitgehend) keine Additive D.

Stärker bevorzugt enthält die thermoplastische Formmasse F (oder besteht die die thermoplastische Formmasse F aus):
I) 2,5 bis 35 Gew.-%, insbesondere 12,5 bis 21 Gew.-%, an mindestens einem Pfropfkautschuk P-I gemäß der vorliegenden Erfindung;
II) 2 bis 22,5 Gew-%, insbesondere 10 bis 13,5 Gew.-%, an mindestens einem Pfropfkautschuk P-II gemäß der vorliegenden Erfindung;
III) 22,5 bis 95,5 Gew.-%, insbesondere 60,5 bis 77,5 Gew.-%, mindestens eine kautschukfreie Copolymer-Matrix P-III gemäß der vorliegenden Erfindung;
IV) 0 bis 10 Gew.-%, insbesondere 0 Gew.-%, an einem oder mehreren nicht aus Vinylmonomeren aufgebauten thermoplastischen Komponenten T; und
V) 0 bis 10 Gew.-%, insbesondere 0 bis 5 Gew.-%, an einem oder mehreren Additive(n) D.

Noch stärker bevorzugt enthält die thermoplastische Formmasse F (oder besteht die die thermoplastische Formmasse F aus):
I) 12,5 bis 21 Gew.-%, an mindestens einem Pfropfkautschuk P-I gemäß der vorliegenden Erfindung;
II) 10 bis 13,5 Gew.-%, an mindestens einem Pfropfkautschuk P-II gemäß der vorliegenden Erfindung;
III) 60,5 bis 77,5 Gew.-%, mindestens eine kautschukfreie Copolymer-Matrix P-III gemäß der vorliegenden Erfindung; und
V) 0 bis 5 Gew.-%, an einem oder mehreren Additive(n) D.

Bevorzugt besteht die thermoplastische Formmasse F gemäß der vorliegenden Erfindung aus:
I) 2,5 bis 35 Gew.-%, insbesondere 12,5 bis 21 Gew.-%, an mindestens einem Pfropfkautschuk P-I erhalten durch mittels anorganischer Persalz-Initiierung durchgeführter Emulsionspolymerisation von
   20 bis 50 Gew.-% Styrol und Acrylnitril im Gewichtsverhältnis Styrol:Acrylnitril von 80:20 bis 65:35,
   in Gegenwart von 50 bis 80 Gew.-% an Polybutadienlatices A und B, wobei das Gewichtsverhältnis der Feststoffe der Polybutadienlatices A:B 60:40 bis 40:60 beträgt, wobei
   das Polybutadienlatex A einen mittleren Teilchendurchmesser d₅₀ von 250 bis 310 nm und einen Gelgehalt von 45 bis 70 Gew.-% aufweist und
   das Polybutadienlatex B einen mittleren Teilchendurchmesser d₅₀ von 360 bis 460 nm und einen Gelgehalt von 55 bis 90 Gew.-% aufweist,
   wobei die Polybutadienlatices A und B mittels Saatpolymerisation eines Polybutadienlatex C mit einem mittleren Teilchendurchmesser d₅₀ von 10 bis 220 nm als Saatlatex erhalten wurden;
II) 2 bis 22,5 Gew-%, insbesondere 10 bis 13,5 Gew.-%, an mindestens einem Pfropfkautschuk P-II erhalten durch mittels anorganischer Persalz-Initiierung durchgeführter Emulsionspolymerisation von Styrol und Acrylnitril im Gewichtsverhältnis Styrol:Acrylnitril von 80:20 bis 65:35 in Gegenwart des Polybutadienlatex C mit einem mittleren Teilchendurchmesser d₅₀ von 10 bis 220 nm,
   wobei der Polybutadienlatex C einen mittleren Teilchendurchmesser d₅₀ von 30 bis 200 nm und einen Gelgehalt von 50 bis 92 Gew.-% aufweist;
III) 22,5 bis 95,5 Gew.-%, insbesondere 60,5 bis 77,5 Gew.-%, mindestens eine kautschukfreie Copolymer-Matrix P-III aus Styrol und Acrylnitril im Gewichtsverhältnis Styrol:Acrylnitril von 80:20 bis 65:35;
IV) 0 bis 10 Gew.-%, insbesondere 0 Gew.-%, an einem oder mehreren nicht aus Vinylmonomeren aufgebauten thermoplastischen Komponenten T; und
V) 0 bis 10 Gew.-%, insbesondere 0 bis 5 Gew.-%, an einem oder mehreren Additive(n) D,
wobei die Pfropfkautschuke P-I und P-II durch Cofällung einer Mischung der jeweiligen Emulsionen enthaltend P-I und P-II (Mischung P-I/P-II) aufgearbeitet werden,
wobei das P-I:P-II-Gewichtsverhältnis bevorzugt 70:30 bis 35:65 beträgt.

Ein weiterer Aspekt der vorliegenden Erfindung betrifft ein Verfahren zum Herstellen einer thermoplastischen Formmasse F, umfassend die folgenden Schritte:
(i) Bereitstellen von mindestens einem Polybutadienlatex C mit einem mittleren Teilchendurchmesser d₅₀ von 10 bis 220 nm;
(ii) Herstellen von mindestens einem Polybutadienlatex A mit einem mittleren Teilchendurchmesser d₅₀ von 230 bis 330 nm und mindestens einem Polybutadienlatex B mit einem mittleren Teilchendurchmesser d₅₀ von 340 bis 480 nm durch Saatpolymerisation auf dem Polybutadienlatex C aus Schritt (i);
(iii) Herstellen eines Pfropfkautschuks P-I durch mittels anorganischer Persalz-Initiierung durchgeführter Emulsionspolymerisation von Styrol und Acrylnitril im Gewichtsverhältnis von 95:5 bis 50:50, wobei Styrol ganz oder teilweise ersetzt werden kann durch alpha-Methylstyrol, und wobei Acrylnitril ganz oder teilweise ersetzt werden kann durch Methylmethacrylat oder N-Phenylmaleinimid, in Gegenwart der Polybutadienlatices A und B aus Schritt (ii);
(iv) Herstellen eines Pfropfkautschuks P-II durch mittels anorganischer Persalz-Initiierung durchgeführter Emulsionspolymerisation von Styrol und Acrylnitril im Gewichtsverhältnis von 95:5 bis 50:50, wobei Styrol ganz oder teilweise ersetzt werden kann durch alpha-Methylstyrol, und wobei Acrylnitril ganz oder teilweise ersetzt werden kann durch Methylmethacrylat oder N-Phenylmaleinimid, in Gegenwart des Polybutadienlatex C;
(v) Mischen der Emulsionen enthaltend die Pfropfkautschuke P-I und P-II aus Schritten (iii) und (iv);
(vi) Co-Fällen der Pfropfkautschuke P-I und P-II aus der diese Pfropfkautschuke P-I und P-II umfassenden Emulsion aus Schritt (v);
(vii) Abtrennen der co-gefällten Pfropfkautschuke P-I und P-II aus Schritt (vi) durch Filtration oder Zentrifugation;
(viii) Trocknen der abgetrennten co-gefällten Pfropfkautschuke P-I und P-II aus Schritt (vii); und
(ix) Vermengen der getrockneten co-gefällten Pfropfkautschuke P-I und P-II aus Schritt (viii) mit mindestens einer kautschukfreien Copolymer-Matrix P-III aus Styrol und Acrylnitril im Gewichtsverhältnis von 95:5 bis 50:50, wobei Styrol ganz oder teilweise ersetzt werden kann durch alpha-Methylstyrol bei 200 bis 300°C.

Im Zusammenhang des erfindungsgemäßen Verfahrens sind alle hierin gemachten Definitionen und Charakterisierungen, insbesondere auch solche, die im Zusammenhang mit der erfindungsgemäßen Formmasse F stehen, auch anwendbar.

Ein bevorzugtes Ausführungsbespiel für ein Herstellungsverfahren im Sinne der vorliegenden Erfindung ist auch dem untenstehenden experimentellen Beispielteil zu entnehmen. Dies betrifft auch die Teilschritte des hierin gezeigten Verfahrens. Gemäß einer bevorzugten Ausführungsform weist die durch das erfindungsgemäße Verfahren hergestellte thermoplastische Formmasse F die Merkmale gemäß der vorliegenden Erfindung auf.

Im Allgemeinen kann das Verfahren bei einem normalen Luftdruck von etwa 1 atm durchgeführt werden. Dass sich lokal durch Scherkräfte, Flüssigkeitssäulen und/oder Pumpvorgänge in den verwendeten Gefäßen und technischen Anlagen zeitweilig andere Druckverhältnisse ergeben können, wird der Fachmann unmittelbar verstehen. Andere Druckverhältnisse sind jedoch möglich.

Das Bereitstellen von mindestens einem Polybutadienlatex C nach Schritt (i) kann auf beliebige Weise erfolgen. Die bevorzugten Eigenschaften des Polybutadienlatex C sind oben genauer beschrieben. Optional kann das Polybutadienlatex C kommerziell erworben werden. Auch kann, wie oben beschrieben, das Polybutadienlatex C selbst durch Saatpolymerisation hergestellt werden.

Das Herstellen von mindestens einem Polybutadienlatex A und mindestens einem Polybutadienlatex B (Schritt (ii)) erfolgt durch Saatpolymerisieren auf das Polybutadienlatex C aus Schritt (i). Hierfür sind jegliche im Stand der Technik bekannte Verfahren möglich. Bevorzugt erfolgt das Saatpolymerisieren wie oben beschrieben.

Auch das Herstellen eines Pfropfkautschuks P-I (Schritt (iii)) sowie eines Pfropfkautschuks P-I (Schritt (iv)) erfolgt bevorzugt wie oben beschrieben.

Gemäß einer bevorzugten Ausführungsform werden in Schritt (iii) des Herstellens eines Pfropfkautschuks P-I Styrol-Monomere und Acrylnitril-Monomere kontinuierlich zu den Polybutadienlatices A und B zugegeben.

Zusätzlich oder alternativ werden in Schritt (iv) des Herstellens eines Pfropfkautschuks P-II Styrol-Monomere und Acrylnitril-Monomere kontinuierlich zu Polybutadienlatex C zugegeben.

Gemäß einer bevorzugten Ausführungsform werden in Schritt(en) (iii) und/oder (iv) des Herstellens eines Pfropfkautschuks P-I und/oder P-II Styrol-Monomere und Acrylnitril-Monomere kontinuierlich zu den Polybutadienlatices A und B bzw. Polybutadienlatex C zugegeben.

Gemäß einer stärker bevorzugten Ausführungsform werden in Schritten (iii) und (iv) des Herstellens der Pfropfkautschuke P-I und P-II jeweils Styrol-Monomere und Acrylnitril-Monomere kontinuierlich zu den Polybutadienlatices A, B und C zugegeben.

Die Pfropfpolymerisationen zur Herstellung der Pfropfkautschuke P-I und P-II können nach beliebigen Verfahren durchgeführt werden. Vorzugsweise werden sie so durchgeführt, dass das Monomer-Gemisch kontinuierlich zum Gemisch der Polybutadienlatices A und B bzw. zum Polybutadienlatex C gegeben und polymerisiert wird. Dabei werden bevorzugt spezielle Monomer-/Kautschuk-Verhältnisse eingehalten und die Monomeren in einer bekannten Weise zum Kautschuk gegeben.

Besonders bevorzugt werden in Schritten (iii) und (iv) des Herstellens eines Pfropfkautschuks P-I und P-II Styrol-Monomere und Acrylnitril-Monomere kontinuierlich zu den entsprechenden Polybutadienlatices A und B bzw. C zugegeben.

Hierbei kann in Schritt(en) (iii) und/oder (iv) der Monomerenzulauf im Prinzip über die gesamte Zulaufzeit gleich bleiben, zunehmend ansteigen, zunehmend absteigen oder jedes beliebige andere Zulaufprofil aufweisen. Gemäß einer besonders bevorzugten Ausführungsform beträgt der Monomerenzulauf innerhalb der ersten Hälfte der Monomerenzulaufzeit 55 bis 90 Gew.-%, stärker bevorzugt 60 bis 80 Gew.-%, insbesondere 65 bis 75 Gew.-%. Der verbleibende Monomer-Anteil wird dann innerhalb der zweiten Hälfte der Gesamtmonomerdosierzeit dosiert.

Zusätzlich können bei der Pfropfpolymerisation Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf Gesamtmonomermenge in der Pfropfpolymerisationsstufe). Geeignete Molekulargewichtsregler sind beispielsweise Alkylmercaptane wie n-Dodecylmercaptan, tert.-Dodecylmercaptan, dimeres α-Methylstyrol und/oder Terpinolen.

Die Polymerisationstemperatur bei der Durchführung der Schritte beträgt bevorzugt 25°C bis 160°C, insbesondere 40°C bis 90°C.

Geeignete Emulgatoren sind oben angegeben. Dabei kann nach üblicher Temperaturführung, z.B. isotherm, gearbeitet werden; vorzugsweise wird die Pfropfpolymerisation jedoch so durchgeführt, dass der Temperaturunterschied zwischen Beginn und Ende der Reaktion mindestens 10°C, vorzugsweise mindestens 15°C und besonders bevorzugt mindestens 20°C beträgt. Stärker bevorzugt steigt die Temperatur im Laufe der Polymerisation um mindestens 10°C, vorzugsweise mindestens 15°C oder mindestens 20°C, an, beispielhaft von einer Temperatur von 55 bis 65°C auf eine Temperatur von 75 bis 85°C. Es kann aber auch eine Temperatur beibehalten werden, etwa eine Temperatur im Bereich von 55 bis 85°C.

Die Reaktionsbedingungen können optional in Schritt (iii) und Schritt (iv) gleich, ähnlich oder verschieden sein.

Die Emulsionspolymerisation wird bevorzugt innerhalb von 30 min bis zwei Tage durchgeführt, stärker bevorzugt innerhalb von 1 bis 24 h, insbesondere 2 bis 10 h, beispielhaft 3 bis 7 h. Dem kann eine Zeit der Nachpolymerisation ohne weiteren Monomerenzulauf folgen, um die Reaktionsausbeute zu erhöhen.

Die Pfropfpolymere P-I und/oder P-II können optional nach der Pfropfpolymerisationsreaktion getrocknet werden, etwa bei einer Temperatur von 50 bis 200°, bevorzugt 100 bis 200°C, insbesondere 150 bis 190°C. Der Trocknungsprozess kann 5 min bis 24 h, bevorzugt 10 min bis 12 h, insbesondere 15 min bis 1 h, dauern.

Die so in Emulsionspolymerisation synthetisierten Pfropfkautschuke P-I und P-II werden dann erfindungsgemäß weiter aufgearbeitet, wobei die Pfropfkautschuke P-I und P-II aus ihrer Mischung P-I/P-II co-gefällt werden. Um die Pfropfkautschuke während der weiteren Aufarbeitung (umfassend die Schritte (v)-(ix) des Mischens der Emulsionen, des Co-Fällens der Pfropfkautschuke P-I und P-II aus der gemischten Emulsion (Mischung P-I/P-II)s, des Abtrennens, Trocknens und des Vermengens der co-gefällten Pfropfkautschuke P-I und P-II (daher der Mischung P-I/P-II) mit mindestens einer kautschukfreien Copolymer-Matrix P-III und optional weiteren Komponenten) vor thermischer Schädigung zu schützen und um die Aufarbeitung sicher und gefahrlos durchführen zu können, können optional schützende Zusätze vor oder während einem oder mehreren beliebigen der Schritte (v), (vi), (vii), (viii) und/oder (ix) beigemengt werden. Beispielhaft können ein oder mehr Antioxidantien (z.B. ein oder mehrere phenolische Antioxidantien) und/oder andere beliebige andere Substanzen, die die thermische Beständigkeit der Pfropfkautschuke erhöhen, beigemengt werden. Diese könne etwa in Form einer oder mehreren Emulsionen oder Dispersionen den Pfropfkautschuken P-I und P-II zugesetzt und durch Rühren mit letzteren vermischt werden.

Optional kann/können das Pfropfkautschuk P-I und/oder das Pfropfkautschuk P-II auch mit beliebigen Mitteln koaguliert werden. Beispielsweise kann durch eine Elektrolytlösung (z.B. eine Salzlösung, eine Säurelösung oder eine Salz- und Säurelösung) koaguliert werden. Beispielhaft kann mittels einer Magnesiumsulfat/Schwefelsäure-Lösung (z.B. enthaltend 1 Gew.-% Magnesiumsulfat und 0,07 Gew.-% Schwefelsäure in Wasser) koaguliert werden. Hierbei kann der Anteil an Pfropfkautschuk P-I bzw. P-II in der ausgefällten Dispersion etwa 5 bis 50 Gew.-%, bevorzugt 10 bis 30 Gew.-%, insbesondere 15 bis 20 Gew.-%, betragen.

Beispielhaft kann die Elektrolytlösung vorgelegt und Pfropfkautschuk P-I bzw. P-II zugegeben werden. Dann kann optional erwärmt werden, etwa auf eine Temperatur von 50 bis 99°C, bevorzugt 80 bis 99°C, insbesondere 90 bis 98°C. Beispielhaft ist das Koagulieren im untenstehenden experimentellen Beispielteil dargelegt.

Der Schritt (v) des Mischens der Emulsionen enthaltend die Pfropfkautschuke P-I und P-II kann auf beliebige Weise erfolgen. Bevorzugt das Mischen eine homogene Vermischung der Pfropfkautschuke P-I und P-II. Dies kann beispielhaft durch Statik-Mischer, Verrühren und/oder Schütteln erfolgen.

Optional kann der Schritt (v) des Mischens der Emulsionen enthaltend die Pfropfkautschuke P-I und P-II auch das erste oder erneute Koagulieren umfassen. Beispielsweise kann durch eine Elektrolytlösung (z.B. eine Salzlösung, eine Säurelösung oder eine Salz- und Säurelösung) koaguliert werden. Beispielhaft kann mittels einer Magnesiumsulfat/Schwefelsäure-Lösung (z.B. enthaltend 0,5 bis 2, insbesondere 0,75 bis 1,5, Gew.-% Magnesiumsulfat und optional bis zu 0,2, insbesondere 0,5 bis 0,1, Gew.-% Schwefelsäure, beispielhaft 1 Gew.-% Magnesiumsulfat und 0,07 Gew.-% Schwefelsäure in Wasser) koaguliert werden. Hierbei kann der Gesamtanteil an Pfropfkautschuk P-I und P-II (daher der Mischung P-I/P-II) in der ausgefällten Dispersion etwa 5 bis 50 Gew.-%, bevorzugt 10 bis 30 Gew.-%, insbesondere 15 bis 20 Gew.-%, betragen.

Der Schritt (vi) des Co-Fällens der Pfropfkautschuke P-I und P-II aus der diese Pfropfkautschuke P-I und P-II umfassenden Emulsion (Mischung P-I/P-II) kann mit beliebigen, im Stand der Technik bekannten Mitteln erfolgen.

Gemäß einer bevorzugten Ausführungsform umfasst das Co-Fällen gemäß Schritt (vi):
a) bei gleichzeitiger Vermischung durch Rühren die Einwirkung von wässrigen Elektrolytlösungen, bevorzugt solche, die enthalten:
   ein oder mehr Salze ausgewählt aus der Gruppe bestehend aus Magnesiumsulfat, Kieserit, Pentahydrit, Hexahydrit, Epsomit (Bittersalz), Calciumchlorid, Natriumchlorid oder Mischungen aus zwei oder mehr daraus und/oder ein oder mehr Säuren, insbesondere Schwefelsäure und/oder Essigsäure;
b) die Einwirkung von Temperaturen von 20 bis 150°C, bevorzugt 40 bis 100°C, insbesondere 45 bis 99°C;
c) die Einwirkung von Scherkräften; und/oder
d) Trocknung, insbesondere Sprühtrocknung.

Stärker bevorzugt umfasst das Co-Fällen gemäß Schritt (vi) bei gleichzeitiger Vermischung durch Rühren eine Einwirkung von wässrigen Elektrolytlösungen, bevorzugt solche die enthalten: ein oder mehr Salze, insbesondere ein oder mehr Salze ausgewählt aus der Gruppe bestehend aus Magnesiumsulfat, Kieserit, Pentahydrit, Hexahydrit, Epsomit (Bittersalz), Calciumchlorid, Natriumchlorid oder Mischungen aus zwei oder mehr daraus und/oder ein oder mehr Säuren, insbesondere Schwefelsäure und/oder Essigsäure.

Gemäß einer bevorzugten Ausführungsform umfasst das Co-Fällen gemäß Schritt (vi) bei gleichzeitiger Vermischung durch Rühren eine Einwirkung von wässrigen Elektrolytlösungen, die ein oder mehr Salze und ein oder mehr Säuren enthalten.

Gemäß einer anderen bevorzugten Ausführungsform umfasst das Co-Fällen gemäß Schritt (vi) bei gleichzeitiger Vermischung durch Rühren eine Einwirkung von wässrigen Elektrolytlösungen, bevorzugt solche, die ein oder mehr Salze ausgewählt aus der Gruppe bestehend aus Magnesiumsulfat, Kieserit, Pentahydrit, Hexahydrit, Epsomit (Bittersalz) oder Mischungen aus zwei oder mehr daraus und mindestens einer der Säuren Schwefelsäure und Essigsäure enthalten.

Gemäß einer bevorzugten Ausführungsform wird mittels einer Magensiumsulfat-haltigen Elektrolytlösung koaguliert und/oder co-gefällt, bevorzugt mittels einer Elektrolytlösung enthaltend 0,5 bis 2, insbesondere 0,75 bis 1,5, Gew.-% Magnesiumsulfat und optional bis zu 0,2, insbesondere 0,5 bis 0,1, Gew.-% Schwefelsäure, beispielhaft 1 Gew.-% Magnesiumsulfat und 0,07 Gew.-% Schwefelsäure in Wasser.

Bevorzugt umfasst das Co-Fällen gemäß Schritt (vi) bei gleichzeitiger Vermischung durch Rühren eine Einwirkung von wässrigen Elektrolytlösungen, die ein oder mehr Salze ausgewählt aus der Gruppe bestehend aus Magnesiumsulfat, Kieserit, Pentahydrit, Hexahydrit, Epsomit (Bittersalz) oder Mischungen aus zwei oder mehr daraus und Schwefelsäure enthalten.

Das Co-Fällen gemäß Schritt (vi) durch Einwirkung von ein oder mehr wässrigen Elektrolytlösungen können kontinuierlich oder absatzweise durchgeführt werden.

Im Falle der kontinuierlichen Fahrweise kann die Fällung mindestens in einem, vorzugsweise in mindestens zwei, besonders bevorzugt in mindestens drei und ganz besonders bevorzugt in mindestens vier kontinuierlich betriebenen Rührbehältern stattfinden.

Das Co-Fällen gemäß Schritt (vi) kann bei jeder geeigneten Temperatur erfolgen. Bevorzugt wird dieser Schritt (vi) in einem Temperaturbereich von 20 bis 150°C durchgeführt. Stärker bevorzugt wird dieser Schritt (vi) in einem Temperaturbereich von 40 bis 100°C durchgeführt. Besonders bevorzugt wird dieser Schritt (vi) in einem Temperaturbereich von 45 bis 99°C durchgeführt.

An den Schritt des Co-Fällens der Propfkautschuke P-I und P-II (aus ihrer Mischung P-I/P-II) schließt sich der Schritt des Abtrennens der co-gefällten Pfropfkautschuke P-I und P-II durch Filtration oder Zentrifugation (Schritt (vii)) an. Hierbei werden die co-gefällten Pfropfkautschuke P-I und P-II (weitgehend) von dem Reaktionsmedium (etwa einer wässrigen Elektrolytlösung) abgetrennt. Filtration kann optional Filtration oder Vakuumfiltration sein. Optional kann auch durch eine Kombination aus Filtration und Zentrifugation abgetrennt werden. Dadurch wird eine wasserfeuchte Pfropfkautschukmischung enthaltend P-I und P-II erhalten.

In einem darauf folgenden Schritt (viii) wird dann die (wasser)feuchte Pfropfkautschukmischung enthaltend P-I und P-II getrocknet. Dies kann beispielhaft mittels eines Umluft- oder Vakuumtrockenschranks erfolgen. Das Trocknen kann beispielhaft bei einer Temperatur von 50 bis 200°C erfolgen, bevorzugt bei einer Temperatur von 50 bis 100°C.

Wie oben ausgeführt können neben den Pfropfkautschuken P-I und P-II (eingesetzt als deren Mischung P-I/P-II) und den ein oder mehreren kautschukfreien Copolymeren P-III beim Schritt (ix) des Vermengens der Komponenten miteinander optional auch ein oder mehr nicht aus Vinylmonomeren aufgebauten thermoplastischen Komponenten T und/oder ein oder mehr Additive D zugesetzt werden. Die Komponenten können hierbei in vollständig oder weitgehend getrockneter Form vermengt werden. Alternativ kann eine Vermengung auch in feuchter oder restfeuchter Form vorgenommen werden.

Der Schritt (ix) des Vermengens der Komponenten miteinander kann prinzipiell auf jede dazu geeignete Art und bei jeder geeigneten Temperatur erfolgen. Bevorzugt erfolgt das Vermengen der Komponenten miteinander bei einer Temperatur von 100°C bis 400°C, stärker bevorzugt 150°C bis 350°C, insbesondere 200°C bis 300°C. Alternativ ist auch die Compoundierung bei einer Temperatur von 15°C bis 100°C, beispielhaft bei (etwa) 20°C, möglich. Beispielhaft können die Komponenten miteinander in einem optional beheizten Knetreaktor (z.B. Innenkneter), einem optional beheizten Extruder oder einer optional beheizten Doppelwellenschnecke miteinander vermengt werden. Ein Vermengen unter erhöhter Temperatur kann hierbei auch als Schmelzecompoundierierung bzw. Schmelzextrudierung bezeichnet werden. Der Schritt (ix) des Vermengens der Komponenten miteinander kann sukzessiv oder simultan erfolgen. Daher können die Komponenten alle gleichzeitig zugegeben werden oder hintereinander zugegeben werden.

Gemäß einer stark bevorzugten Ausführungsform umfasst das Verfahren zum Herstellen einer thermoplastischen Formmasse F die folgenden Schritte:
(i) Bereitstellen von mindestens einem Polybutadienlatex C gemäß der vorliegenden Erfindung (insbesondere wie oben im Zusammenhang mit der thermoplastischen Formmasse F beschrieben);
(ii) Herstellen von mindestens einem Polybutadienlatex A und mindestens einem Polybutadienlatex B, jeweils gemäß der vorliegenden Erfindung (insbesondere wie oben im Zusammenhang mit der thermoplastischen Formmasse F beschrieben) durch Saatpolymerisation auf dem Polybutadienlatex C aus Schritt (i);
(iii) Herstellen eines Pfropfkautschuks P-I durch mittels anorganischer Persalz-Initiierung durchgeführter Emulsionspolymerisation von Styrol und Acrylnitril im Gewichtsverhältnis von 80:20 bis 65:35 in Gegenwart der Polybutadienlatices A und B aus Schritt (ii), wobei Styrol-Monomere und Acrylnitril-Monomere kontinuierlich zu den Polybutadienlatices A und B zugegeben werden und die Masse der Monomere des Monomeren-Zulaufs innerhalb der ersten Hälfte der Monomerenzulaufzeit 65 bis 75 Gew.-% beträgt;
(iv) Herstellen eines Pfropfkautschuks P-II durch mittels anorganischer Persalz-Initiierung durchgeführter Emulsionspolymerisation von Styrol und Acrylnitril im Gewichtsverhältnis von 80:20 bis 65:35 in Gegenwart des Polyutadienlatex C,wobei Styrol-Monomere und Acrylnitril-Monomere kontinuierlich zu Polyutadienlatex C zugegeben werden und die Masse der Monomere des Monomeren-Zulaufs innerhalb der ersten Hälfte der Monomerenzulaufzeit 65 bis 75 Gew.-% beträgt;
(v) Mischen der Emulsionen aus den Pfropfkautschuken P-I und P-II aus Schritten (iii) und (iv);
(vi) Co-Fällen der Pfropfkautschuke P-I und P-II aus der diese Pfropfkautschuke P-I und P-II umfassenden Emulsion aus Schritt (v);
(vii) Abtrennen der co-gefällten Pfropfkautschuke P-I und P-II aus Schritt (vi) durch Filtration oder Zentrifugation;
(viii) Trocknen der abgetrennten co-gefällten Pfropfkautschuke P-I und P-II aus Schritt (vii); und
(ix) Vermengen der getrockneten co-gefällten Pfropfkautschuke P-I und P-II aus Schritt (viii) mit mindestens einer kautschukfreien Copolymer-Matrix P-III aus Styrol und Acrylnitril im Gewichtsverhältnis von 80:20 bis 65:35 bei 200 bis 300°C,
wobei das Co-Fällen gemäß Schritt (vi) umfasst (bei gleichzeitiger Vermischung durch Rühren) die Einwirkung von wässrigen Elektrolytlösungen, bevorzugt solche, die enthalten:
ein oder mehr Salze ausgewählt aus der Gruppe bestehend aus Magnesiumsulfat, Kieserit, Pentahydrit, Hexahydrit, Epsomit (Bittersalz), Calciumchlorid, Natriumchlorid oder Mischungen aus zwei oder mehr daraus und/oder ein oder mehr Säuren (insbesondere Schwefelsäure und/oder Essigsäure), insbesondere Magnesiumsulfat-haltige Elektrolytlösungen;
b) die Einwirkung von Temperaturen von 45 bis 99°C; und optional
c) die Einwirkung von Scherkräften; und optional
d) Trocknung.

Ein bevorzugtes Aufarbeitungsverfahren nach der Ausfällung stellt die in EP-A 867 463 beschriebene Mischung der feuchten Pfropfkautschuke P-I und P-II (daher der Mischung P-I/P-II) mit einer Schmelze aus thermoplastischen Komponenten, die kautschukfreies Pfropfpolymer P-III und optional thermoplastische Komponente(n) T und/oder Additive D enthält, in einem Knetreaktor dar. Als Additive D können hierbei beliebige im Stand der Technik zu diesem Zweck bekannte Polymeradditive verwendet werden. Als thermoplastische Komponenten T können hierbei beliebige im Stand der Technik zu diesem Zweck bekannte thermoplastische Harze verwendet werden. Beispiele hierfür sind oben angeführt.

Die nach dem Verfahren erhaltene thermoplastische Formmasse F, die die Pfropfkautschuke P-I und P-II (daher der Mischung P-I/P-II) sowie kautschukfreie Copolymer-Matrix P-III enthält, ist selbst erfindungsgemäß und kann zu jedem beliebigen Zweck verwendet werden. Beispielsweise können beliebige Formkörper hieraus hergestellt werden.

Daher betrifft ein weiterer Aspekt der vorliegenden Erfindung Formkörper, erhältlich (bzw. erhalten) aus einer thermoplastischen Formmasse F gemäß der vorliegenden Erfindung und/oder erhältlich (bzw. erhalten) nach einem Verfahren gemäß der vorliegenden Erfindung. Derartige Formkörper können beispielsweise durch Spritzguss, Extrusion und Blasformverfahren hergestellt werden. Eine weitere Form der Verarbeitung ist die Herstellung von Formteilen durch Tiefziehen aus zuvor hergestellten Platten oder Folien und das Verfahren der Folienhinterspritzung. Beispiele für solche Formteile sind Folien, Profile, Gehäuseteile jeder Art, beispielsweise für Haushaltsgeräte wie Saftpressen, Kaffeemaschinen, Mixer; für Büromaschinen wie Monitore, Drucker, Kopierer; Automobilaußen- und -Innenteilen; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen.

Insbesondere können die erfindungsgemäßen Formmassen auch zur Herstellung von folgenden Formteilen verwendet werden: Innenausbauteile für Schienenfahrzeuge, Schiffe, Flugzeuge, Busse und andere Kraftfahrzeuge, Karosserieaußenteile im Kfz-Bereich, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Vorrichtung zur Haltung oder Versorgung von Kleintieren, Formteile für Sanitär- und Badausrüstungen, Abdeckgitter für Lüfteröffnungen, Formteile für Garten- und Gerätehäuser, Gehäuse für Gartengeräte.

Die hierin gezeigten Beispiele und Ansprüche erläutern die Erfindung.

### Beispiele

### Pfropfkautschuk P-I

30 Gew.-Teile (gerechnet als Feststoff) eines unter Verwendung eines Polybutadien-Saatlatex mit einem mittleren Teilchendurchmesser d₅₀ von 113 nm (Polybutadienlatex C) durch radikalische Emulsionspolymerisation hergestellten anionisch emulgierten Polybutadienlatex mit einem mittleren Teilchendurchmesser d₅₀ von 299 nm und einem Gelgehalt von 60 Gew.-% (Polybutadienlatex A) und 30 Gew.-Teile (gerechnet als Feststoff) eines unter Verwendung eines Polybutadien-Saatlatex mit einem mittleren Teilchendurchmesser d₅₀ von 113 nm (Polybutadienlatex C, Herstellung siehe unten) durch radikalische Emulsionspolymerisation hergestellten anionisch emulgierten Polybutadienlatex mit einem mittleren Teilchendurchmesser d₅₀ von 371 nm und einem Gelgehalt von 82 Gew.-% (Polybutadienlatex B) wurden mit Wasser auf einen Feststoffgehalt von ca. 27 Gew.-% gebracht, wonach auf 60°C erwärmt und mit 0,25 Gew.-Teilen Kaliumpersulfat (gelöst in Wasser) versetzt wurde. Danach wurden 40 Gew.-Teile eines Gemisches aus 74,5 Gew.-% Styrol, 25,5 Gew.-% Acrylnitril und 0,12 Gew.-Teile tert.-Dodecylmercaptan innerhalb 5 Stunden gleichmäßig dosiert.

Parallel dazu wurden 1,3 Gew.-Teil (gerechnet als Festsubstanz) des Natriumsalzes eines Harzsäuregemisches (Handelsprodukt Burez DRS S70 E, des Unternehmens Lawter BVBA, B-9130 Kallo, Belgien (Spezifikationsdaten: Säurezahl: 11 mg KOH/g, Gehalt an Abietinsäure: < 1%, Gehalt an Dehydroabietinsäure: 38%), gelöst in alkalisch eingestelltem Wasser) über einen Zeitraum von 5 Stunden dosiert und 0,25 Gew.-Teilen Kaliumpersulfat (gelöst in Wasser) ebenfalls über einen Zeitraum von 5 Stunden dosiert. Im Laufe der ersten 3 Stunden wurde die Reaktionstemperatur von 60°C auf 81°C angehoben. Nach Ende aller Dosierungen schloss sich eine zweistündige Nachreaktionszeit bei 81°C an. Anschließend wurde der Pfropflatex auf Raumtemperatur abgekühlt. Der gravimetrisch ermittelte Feststoffgehalt (Trocknung im Umlufttrockenschrank bei 180°C, 23 Minuten) des Pfropfkautschuks betrug 34,9 Gew.-%.

Zu einer Teilmenge des Pfropfkautschuks wurden 1,0 Gew.-Teile eines phenolischen Antioxidans (Irganox 1076, BASF SE) bezogen auf den Feststoff des Pfropfkautschuks zugegeben und vermischt. Anschließend wurde mit einer Magnesiumsulfat/Schwefelsäure-Lösung koaguliert. Die Konzentration des Magnesiumsulfats in der Magnesiumsulfat/Schwefelsäure-Lösung betrug 1 Gew.-% und die Konzentration der Schwefelsäure betrug 0,07 Gew.-%. Die Konzentration des Pfropfkautschuks P-I in der ausgefällten Dispersion betrug 16 Gew.-%. Die Koagulation wurde durchgeführt, indem die Magnesiumsulfat/Schwefelsäure-Lösung vorgelegt wurde und der stabilisierte Pfropfkautschuk unter Rühren zugegeben und anschließend auf 95°C erwärmt wurde.
Der Pfropfkautschuk P-I wurde durch Vakuumfiltration von der wässrigen Phase abgetrennt und mit 1000 Gew.-Teilen kaltem Wasser (ca. 20°C) gewaschen. Das resultierende feuchte Pulver wurde bei 70°C im Umlufttrockenschrank bis zu einer Restfeuchte < 1 Gew.-% (gravimetrische Bestimmung) getrocknet.

### Pfropfkautschuk P-II

51,5 Gew.-Teile (gerechnet als Feststoff) eines unter Verwendung Polybutadien-Saatlatex mit einem mittleren Teilchendurchmesser d₅₀ von 49 nm durch radikalische Saatpolymerisation hergestellten anionisch emulgierten Polybutadienlatex mit einem mittleren Teilchendurchmesser d₅₀ von 113 nm und einem Gelgehalt von 91 Gew.-% (Polybutadienlatex C, Herstellung siehe unten) wurden mit Wasser auf einen Feststoffgehalt von ca. 27 Gew.-% gebracht, wonach auf 60°C erwärmt und mit 0,25 Gew.-Teilen Kaliumpersulfat (gelöst in Wasser) versetzt wurde. Danach wurden 48,5 Gew.-Teile eines Gemisches aus 74,5 Gew.-% Styrol, 25,5 Gew.-% Acrylnitril und 0,10 Gew.-Teile tert.-Dodecylmercaptan innerhalb 5 Stunden gleichmäßig dosiert, parallel dazu wurden 1 Gew.-Teil (gerechnet als Festsubstanz) des Natriumsalzes eines Harzsäuregemisches (Handelsprodukt Burez DRS S70 E, des Unternehmens Lawter BVBA, B-9130 Kallo, Belgien (Spezifikationsdaten: Säurezahl: 11 mg KOH/g, Gehalt an Abietinsäure: < 1%, Gehalt an Dehydroabietinsäure: 38%), gelöst in alkalisch eingestelltem Wasser) über einen Zeitraum von 5 Stunden dosiert und 0,25 Gew.-Teile Kaliumpersulfat (gelöst in Wasser) über einen Zeitraum von 5 Stunden dosiert. Im Laufe der ersten 3 Stunden wurde die Reaktionstemperatur von 60°C auf 81°C angehoben. Nach Ende aller Dosierungen schloss sich eine zweistündige Nachreaktionszeit bei 81°C an und anschließend wurde der Pfropflatex auf Raumtemperatur abgekühlt. Der gravimetrisch ermittelte Feststoffgehalt (Trocknung im Umlufttrockenschrank bei 180°C, 23 Minuten) des Pfropfkautschuks betrug 34.2 Gew.-%.

Zu einer Teilmenge des Pfropfkautschuks wurden 1,0 Gew.-Teile eines phenolischen Antioxidans (Irganox 1076, BASF SE) bezogen auf den Feststoff des Pfropfkautschuks zugegeben und vermischt. Anschließend wurde mit einer Magnesiumsulfat/Schwefelsäure-Lösung koaguliert. Die Konzentration des Magnesiumsulfats in der Magnesiumsulfat/Schwefelsäure-Lösung betrug 1 Gew.-% und die Konzentration der Schwefelsäure betrug 0,07 Gew.-%. Die Konzentration des Pfropfkautschuks in der ausgefällten Dispersion betrug 16 Gew.-%. Die Koagulation wurde durchgeführt, indem die Magnesiumsulfat/Schwefelsäure-Lösung vorgelegt wurde und der stabilisierte Pfropfkautschuk unter Rühren zugegeben und anschließend auf 95°C erwärmt wurde. Das Pfropfkautschuk P-II wurde durch Vakuumfiltration von der wässrigen Phase abgetrennt und mit 1000 Gew.-Teilen kaltem Wasser (ca. 20°C) gewaschen. Das resultierende feuchte Pulver wurde bei 70°C im Umlufttrockenschrank bis zu einer Restfeuchte < 1 Gew.-% (gravimetrische Bestimmung) getrocknet.

### Cofällung der Pfropfkautschuke P-I und P-II

Es wurden Teilmengen der Pfropfkautschuke P-I und P-II im P-I:P-II-Gewichtsverhältnis von 57,53 : 42,47 (gerechnet als Feststoff) durch Rühren vermischt, wodurch die Mischung P-I/P-II entsteht. Zu dieser Mischung wurden 1,0 Gew.-% eines phenolischen Antioxidans (Irganox 1076, BASF SE) bezogen auf den Feststoff der Pfropfkautschukmischung enthaltend die Pfropfkautschuke P-I und P-II zugegeben und vermischt. Anschließend wurde mit einer Magnesiumsulfat/Schwefelsäure-Lösung koaguliert. Die Konzentration des Magnesiumsulfats in der Magnesiumsulfat/Schwefelsäure-Lösung betrug 1 Gew.-% und die Konzentration der Schwefelsäure betrug 0,07 Gew.-%. Die Konzentration der Pfropfkautschukmischung enthaltend die Pfropfkautschuke P-I und P-II in der ausgefällten Dispersion betrug 16 Gew.-%. Die Koagulation wurde durchgeführt, indem die Magnesiumsulfat/Schwefelsäure-Lösung vorgelegt wurde und stabilisierte Pfropfkautschukmischung enthaltend die Pfropfkautschuke P-I und P-II (Mischung P-I/P-II) unter Rühren zugegeben und anschließend auf 95°C erwärmt wurde. Die Pfropfkautschuke P-I und P-II wurden durch Vakuumfiltration von der wässrigen Phase abgetrennt und mit 1000 Gew.-Teilen Wasser gewaschen. Das resultierende feuchte Pulver wurde bei 70°C im Umlufttrockenschrank bis zu einer Restfeuchte < 1 Gew.-% (gravimetrische Bestimmung) getrocknet.

### Kautschukfreie Copolymer-Matrix P-III

Statistisches Styrol/Acrylnitril-Copolymer (Styrol:Acrylnitril-Gewichtsverhältnis 73:27) mit einer gewichtsgemittelten Molmasse M_{w} von 106.000 g/mol und einer zahlengemittelten Molmasse Mₙ von 15.000 g/mol, wurde erhalten durch radikalische Lösungspolymerisation mit peroxidischer Initiierung, wobei die Molmassen M_{w} und Mₙ durch Gelpermeationschromatographie mit Tetrahydrofuran als Lösungsmittel und Polystyrol zur Kalibrierung ermittelt wurden, sowie einem Oligomerengehalt mit einer Molmasse kleiner 1000 g/mol von 1,0 Gew.-%, ebenfalls ermittelt durch Gelpermeationschromatographie mit Tetrahydrofuran als Lösungsmittel und Polystyrol zur Kalibrierung. Zu den Oligomeren in statistischem Styrol/Acrylnitril-Copolymer siehe: K. Kirchner, H. Schlapkohl, Makromol. Chem. 177 (1976) 2031-2042, "The Formation of Oligomers in the Thermal Copolymerisation of the Styrene/Acrylonitrile-System".

Die oben beschriebenen Polymerkomponenten wurden zu den Formmassen F1-F4 in den in Tabelle 1 angegebenen Anteilen, 2 Gew.-Teilen Ethylenbisstearylamid, 0,30 Gew.-Teilen Magnesiumstearat und 0,15 Gew.-Teilen eines Polydimethylsiloxans mit einer Viskosität von 1000 Centistokes (cSt) auf einem Extruder ZSK 25 (Hersteller Coperion) vermischt und nach Granulierung zu Formkörpern verarbeitet.

Insbesondere wurden folgende Daten ermittelt:
∘ Kerbschlagzähigkeit bei Raumtemperatur (ak RT) nach ISO 180/1A (Einheit: kJ/m²)
∘ Schlagzähigkeit bei Raumtemperatur (an RT) nach ISO 180/1U (Einheit: kJ/m²)
∘ thermoplastische Fließfähigkeit (MVR (220/10) bei 220°C und 10 kg Belastung nach ISO 1133, Einheit: cm³/10 min)
∘ Eigenschaften aus einem Zugversuch nach EN ISO 527-1:1996
   ▪ Zugelastitzitätsmodul, E-Modul Eₜ (Einheit MPa)
   ▪ Zugfestigkeit σ_{M} (Einheit MPa)
   ▪ Bruchspannung σ_{B} (Einheit MPa)
∘ Yellowness Index nach ASTM-Methode E313-96
∘ Glanz bei 20° nach DIN 67530
∘ Die Oberflächenqualität wurde durch Messung der Stippenanzahl im Bereich < 250 µm, 250 - 400 µm und > 400 µm (Einheit 1/m²) bestimmt, wobei eine kleinere Stippenanzahl ein besseres Ergebnis bedeutet. Dazu wurden Oberflächenuntersuchungen mit einem Collin Extruder Typ 25 x 25 L/D und angefügten OCS Kameras, Typ FSA 100 (Fa. OCS Optical Control Systems GmbH, Wullener Feld 24, 58454 Witten, Deutschland) mit einer Auflösung von 50 µm durchgeführt. Das Material wurde hierzu aufgeschmolzen, durch eine 150 mm-Breitschlitzdüse mit einem von Düsenspalt 2,0 mm extrudiert, durch mehrere Führungsrollen geleitet und als Band auf einer Rolle aufgewickelt. Hierbei passierte das Band die Kameras, wo im Aufflicht die Partikel auf der Oberfläche quantitativ analysiert wurden. Die inspizierte Fläche, an denen die Stippenanzahl gemessen wurde, betrug dabei 1,0 m².

Die hierin genannten DIN-, ASTM- und ISO-Normen sind bevorzugt die im April 2015 aktuellsten Versionen.

Mit den Prüfergebnissen der Formmassen F1-F4 wurde überraschend gefunden, dass die erfindungsgemäßen Polymerzusammensetzungen F1 und F3 eine bessere Kerbschlagzähigkeit und Schlagzähigkeit bei gleichzeitig verbesserter Oberflächenqualität bei ansonsten vergleichbaren Eigenschaften aufwiesen als die nicht erfindungsgemäßen Formmassen F2 und F4.

**Tabelle 1 (Zusammensetzung und Prüfdaten der Formmassen F1-F4)**

| Formmassen | | F1 | F2 | F3 | F4 |
|---|---|---|---|---|---|
| | | erfindungsgemäß | Vergleich | erfindungsgemäß | Vergleich |
| Zusammensetzung | | | | | |
| Pfropfkautschuk P-I | [Gew.-Teile] | | 17,259 | | 23,012 |
| Pfropfkautschuk P-II | [Gew.-Teile] | | 12,741 | | 16,988 |
| Summe Pfropfkautschuke P-I und P-II | [Gew.-Teile] | | 30,000 | | 40,000 |
| Co-gefällte Mischung der Pfropfkautschuke P-I und P-II | [Gew.-Teile] | 30,000 | | 40,000 | |
| Kautschukfreie Copolymer-Matrix P-III | [Gew.-Teile] | 70,000 | 70,000 | 60,000 | 60,000 |
| Ethylenbisstearylamid | [Gew.-Teile] | 2,00 | 2,00 | 2,00 | 2,00 |
| Magnesiumstearat | [Gew.-Teile] | 0,30 | 0,30 | 0,30 | 0,30 |
| Polydimethylsiloxan [1000 cSt] | [Gew.-Teile] | 0,15 | 0,15 | 0,15 | 0,15 |
| Summe | [Gew.-Teile] | 102,450 | 102,450 | 102,450 | 102,450 |
| Kerbschlagzähigkeit bei Raumtemperatur (ak RT) | [kJ/m²] | 13,8 | 12,5 | 22,3 | 19,8 |
| Schlagzähigkeit bei Raumtemperatur (an RT) | [kJ/m²] | 43,9 | 37,0 | 97,1 | 45,0 |
| MVR (220°C/10kg) | [mL/10 min] | 40,2 | 38,4 | 25,8 | 26,9 |
| Zugelastitzitätsmodul Eₜ | [MPa] | 2478 | 2481 | 2138 | 2148 |
| Zugfestigkeit σ_{M} | [MPa] | 46,7 | 46,7 | 41,5 | 41,8 |
| Bruchspannung σ_{B} | [MPa] | 44,2 | 42,6 | 32,9 | 35,6 |
| Stippenanzahl < 250 µm | [1/m²] | 112 | 154 | 94 | 120 |
| Stippenanzahl 250-400 µm | [1/m²] | 67 | 105 | 71 | 113 |
| Stippenanzahl > 400 µm | [1/m²] | 34 | 42 | 43 | 70 |
| Glanz 20° | | 96,2 | 96,9 | 95,7 | 95,6 |
| Yellowness Index | | 33,1 | 33,4 | 32,2 | 34,2 |

## Patentansprüche

1. Thermoplastische Formmasse F enthaltend:
I) mindestens einen Pfropfkautschuk P-I erhalten durch Emulsionspolymerisation mit anorganischer Persalz-Initiierung und Polymerisation von Styrol und Acrylnitril im Gewichtsverhältnis Styrol:Acrylnitril von 95:5 bis 50:50, wobei Styrol ganz oder teilweise ersetzt werden kann durch alpha-Methylstyrol, und wobei Acrylnitril ganz oder teilweise ersetzt werden kann durch Methylmethacrylat oder N-Phenylmaleinimid in Gegenwart von:
mindestens einem Polybutadienlatex A mit einem mittleren Teilchendurchmesser d₅₀ von 230 bis 330 nm und mindestens einem Polybutadienlatex B mit einem mittleren Teilchendurchmesser d₅₀ von 340 bis 480 nm,
wobei die Polybutadienlatices A und B mittels Saatpolymerisation ausgehend von einem Polybutadienlatex C mit einem mittleren Teilchendurchmesser d₅₀ von 10 bis 220 nm (als Saatlatex) erhalten wurden;
II) mindestens ein Pfropfkautschuk P-II erhalten durch Emulsionspolymerisation mit anorganischer Persalz-Initiierung und Polymerisation von Styrol und Acrylnitril im Gewichtsverhältnis Styrol:Acrylnitril von 95:5 bis 50:50, wobei Styrol ganz oder teilweise ersetzt werden kann durch alpha-Methylstyrol, und wobei Acrylnitril ganz oder teilweise ersetzt werden kann durch Methylmethacrylat oder N-Phenylmaleinimid, in Gegenwart des Polybutadienlatex C mit einem mittleren Teilchendurchmesser d₅₀ von 10 bis 220 nm;
III) mindestens eine kautschukfreie Copolymer-Matrix P-III aus Styrol und Acrylnitril im Gewichtsverhältnis Styrol:Acrylnitril von 95:5 bis 50:50, wobei Styrol ganz oder teilweise ersetzt werden kann durch alpha-Methylstyrol,
IV) optional ein oder mehrere, nicht aus Vinylmonomeren aufgebaute thermoplastische Komponenten T; und
V) optional ein oder mehrere Additive D,
wobei die Pfropfkautschuke P-I und P-II durch Cofällung einer Mischung der jeweiligen Emulsionen enthaltend P-I und P-II aufgearbeitet werden.

2. Thermoplastische Formmasse F gemäß Anspruch 1, bei der:
der Pfropfkautschuk P-I durch Emulsionspolymerisation von Styrol und Acrylnitril im Gewichtsverhältnis von 80:20 bis 65:35 auf die Polybutadienlatices A und B erhalten wurde;
der Pfropfkautschuk P-II durch Emulsionspolymerisation von Styrol und Acrylnitril im Gewichtsverhältnis von 80:20 bis 65:35 auf den Polybutadienlatex C erhalten wurde; und/oder
die kautschukfreie Copolymer-Matrix P-III ein Styrol-Acrylnitril-Copolymer im Gewichtsverhältnis von 80:20 bis 65:35 ist.

3. Thermoplastische Formmasse F gemäß Anspruch 1 oder 2, bei der der Polybutadienlatex A einen mittleren Teilchendurchmesser d₅₀ von 240 bis 320, insbesondere 250 bis 310 nm, und einen Gelgehalt von 30 bis 80 Gew.-%, bevorzugt 40 bis 75 Gew.-%, insbesondere 45 bis 70 Gew.-%, aufweist.

4. Thermoplastische Formmasse F gemäß einem der Ansprüche 1 bis 3, bei der der Polybutadienlatex B einen mittleren Teilchendurchmesser d₅₀ von 350 bis 470, insbesondere 360 bis 460 nm, und einen Gelgehalt von 50 bis 95 Gew.-%, insbesondere 55 bis 90 Gew.-%, aufweist.

5. Thermoplastische Formmasse gemäß einem der Ansprüche 1 bis 4, bei der der Polybutadienlatex C einen mittleren Teilchendurchmesser d₅₀ von 20 bis 210 nm, insbesondere 30 bis 200 nm, und einen Gelgehalt von 30 bis 98 Gew.-%, bevorzugt 40 bis 95 Gew.-%, insbesondere 50 bis 92 Gew.-%, aufweist.

6. Thermoplastische Formmasse gemäß einem der Ansprüche 1 bis 5, bei der die Polybutadienlatices A, B und C jeweils aufgebaut sind aus:
50 bis 100 Gew.-%, bevorzugt 80 bis 100 Gew.-%, insbesondere 90 bis 99 Gew.-%, Butadien; und
0 bis 50 Gew.-%, bevorzugt 0 bis 20 Gew.-%, insbesondere 1 bis 10 Gew.-%, von mit Butadien copolymerisierbaren Monomeren, bevorzugt Monomeren ausgewählt aus der Gruppe bestehend aus Styrol, Acrylnitril, Isopren, Chloropren, alpha-Methylstyrol, C₁-₄-Alkylstyrole, C₁₋₈-Alkylacrylate, C₁₋₈-Alkylmethacrylate, Alkylenglykoldiacrylate, Alkylenglykoldimethacrylate, Divinylbenzol und Kombinationen aus zwei oder mehr der genannten Monomere, insbesondere Styrol und/oder Acrylnitril.

7. Thermoplastische Formmasse F gemäß einem der Ansprüche 1 bis 6, bei der das Gewichtsverhältnis der Feststoffe der Polybutadienlatices A:B von 90:10 bis 10:90, bevorzugt 80:20 bis 20:80, insbesondere 60:40 bis 40:60 beträgt.

8. Thermoplastische Formmasse F gemäß einem der Ansprüche 1 bis 7, bei der das Gewichtsverhältnis der Pfropfkautschuke P-I:P-II von 90:10 bis 10:90, bevorzugt 80:20 bis 20:80, insbesondere 70:30 bis 35:65 beträgt.

9. Thermoplastische Formmasse F gemäß einem der Ansprüche 1 bis 8, bei der die Pfropfkautschuke P-I und P-II jeweils bestehen aus:
15 bis 60 Gew.-%, insbesondere 20 bis 50 Gew.-%, Styrol und Acrylnitril im Gewichtsverhältnis von 95:5 bis 50:50, wobei Styrol ganz oder teilweise ersetzt werden kann durch alpha-Methylstyrol, und wobei Acrylnitril ganz oder teilweise ersetzt werden kann durch Methylmethacrylat oder N-Phenylmaleinimid; und
40 bis 85 Gew.-%, insbesondere 50 bis 80 Gew.-%, der Polybutadienlatices.

10. Thermoplastische Formmasse F gemäß einem der Ansprüche 1 bis 9, bei der die anorganische Persalz-Initiierung jeweils die Zugabe eines oder mehrerer Salze ausgewählt aus der Gruppe bestehend aus Ammoniumpersulfat, Natriumpersulfat, Kaliumpersulfat, Kaliumperphosphat, Natriumperborat oder Mischungen aus zwei oder mehr davon, insbesondere Natrium- und/oder Kaliumpersulfat umfasst.

11. Verfahren zum Herstellen einer thermoplastischen Formmasse F umfassend die folgenden Schritte:
(i) Bereitstellen von mindestens einem Polybutadienlatex C mit einem mittleren Teilchendurchmesser d₅₀ von 10 bis 220 nm;
(ii) Herstellen von mindestens einem Polybutadienlatex A mit einem mittleren Teilchendurchmesser d₅₀ von 230 bis 330 nm und mindestens einem Polybutadienlatex B mit einem mittleren Teilchendurchmesser d₅₀ von 340 bis 480 nm durch Saatpolymerisation auf dem Polybutadienlatex C aus Schritt (i);
(iii) Herstellen eines Pfropfkautschuks P-I durch mittels anorganischer Persalz-Initiierung durchgeführter Emulsionspolymerisation von Styrol und Acrylnitril im Gewichtsverhältnis von 95:5 bis 50:50, wobei Styrol ganz oder teilweise ersetzt werden kann durch alpha-Methylstyrol, und wobei Acrylnitril ganz oder teilweise ersetzt werden kann durch Methylmethacrylat oder N-Phenylmaleinimid, in Gegenwart der Polybutadienlatices A und B aus Schritt (ii);
(iv) Herstellen eines Pfropfkautschuks P-II durch mittels anorganischer Persalz-Initiierung durchgeführter Emulsionspolymerisation von Styrol und Acrylnitril im Gewichtsverhältnis von 95:5 bis 50:50, wobei Styrol ganz oder teilweise ersetzt werden kann durch alpha-Methylstyrol, und wobei Acrylnitril ganz oder teilweise ersetzt werden kann durch Methylmethacrylat oder N-Phenylmaleinimid, in Gegenwart des Polyutadienlatex C;
(v) Mischen der Emulsionen aus den Pfropfkautschuken P-I und P-II aus Schritten (iii) und (iv);
(vi) Co-Fällen der Pfropfkautschuke P-I und P-II aus der diese Pfropfkautschuke P-I und P-II umfassenden Emulsion aus Schritt (v);
(vii) Abtrennen der co-gefällten Pfropfkautschuke P-I und P-II aus Schritt (vi) durch Filtration oder Zentrifugation;
(viii) Trocknen der abgetrennten co-gefällten Pfropfkautschuke P-I und P-II aus Schritt (vii); und
(ix) Vermengen der getrockneten co-gefällten Pfropfkautschuke P-I und P-II aus Schritt (viii) mit mindestens einer kautschukfreien Copolymer-Matrix P-III aus Styrol und Acrylnitril im Gewichtsverhältnis von 95:5 bis 50:50, wobei Styrol ganz oder teilweise ersetzt werden kann durch alpha-Methylstyrol bei 200 bis 300°C.

12. Verfahren gemäß Anspruch 11, wobei die hergestellte thermoplastische Formmasse F die Merkmale gemäß einem der Ansprüche 1 bis 10 aufweist.

13. Verfahren gemäß Anspruch 11 oder 12, wobei in Schritt (iii) und/oder (iv) des Herstellens eines Pfropfkautschuks P-I und/oder P-II Styrol-Monomere und Acrylnitril-Monomere kontinuierlich zu den Polybutadienlatices A und B bzw. Polybutadienlatex C zugegeben werden, bevorzugt wobei die Masse der Monomere des Monomeren-Zulaufs innerhalb der ersten Hälfte der Monomerenzulaufzeit 55 bis 90 Gew.-%, stärker bevorzugt 60 bis 80 Gew.-%, insbesondere 65 bis 75 Gew.-%, beträgt.

14. Verfahren gemäß einem der Ansprüche 11 bis 13, wobei das Co-Fällen gemäß Schritt (vi) umfasst:
a) bei gleichzeitiger Vermischung durch Rühren die Einwirkung von wässrigen Elektrolytlösungen, bevorzugt solche, die enthalten:
ein oder mehr Salze ausgewählt aus der Gruppe bestehend aus Magnesiumsulfat, Kieserit, Pentahydrit, Hexahydrit, Epsomit (Bittersalz), Calciumchlorid, Natriumchlorid oder Mischungen aus zwei oder mehr daraus und/oder
ein oder mehr Säuren, insbesondere Schwefelsäure und/oder Essigsäure;
b) die Einwirkung von Temperaturen von 20 bis 150°C, bevorzugt 40 bis 100°C, insbesondere 45 bis 99°C;
c) die Einwirkung von Scherkräften; und/oder
d) Trocknung.

15. Formkörper, erhältlich aus einer thermoplastischen Formmasse F gemäß einem der Ansprüche 1 bis 10 oder einer thermoplastischen Formmasse F, erhältlich nach einem Verfahren der Ansprüche 11 bis 14.

## Claims

1. Thermoplastic molding composition F comprising:
I) at least one graft rubber P-I obtained by emulsion polymerization with inorganic persalt initiation and polymerization of styrene and acrylonitrile in a styrene:acrylonitrile ratio by weight of from 95:5 to 50:50, where styrene can be replaced entirely or to some extent by alpha-methylstyrene, and where acrylonitrile can be replaced entirely or to some extent by methyl methacrylate or N-phenylmaleimide, in the presence of:
at least one polybutadiene latex A with average particle diameter d₅₀ from 230 to 330 nm and at least one polybutadiene latex B with average particle diameter d₅₀ from 340 to 480 nm,
where the polybutadiene latices A and B have been obtained by means of seed polymerization starting from a polybutadiene latex C with average particle diameter d₅₀ from 10 to 220 nm (as seed latex) ;
II) at least one graft rubber P-II obtained by emulsion polymerization with inorganic persalt initiation and polymerization of styrene and acrylonitrile in a styrene:acrylonitrile ratio by weight of from 95:5 to 50:50, where styrene can be replaced entirely or to some extent by alpha-methylstyrene, and where acrylonitrile can be replaced entirely or to some extent by methyl methacrylate or N-phenylmaleimide, in the presence of the polybutadiene latex C with average particle diameter d₅₀ from 10 to 220 nm;
III) at least one rubber-free copolymer matrix P-III made of styrene and acrylonitrile in a styrene:acrylonitrile ratio by weight of from 95:5 to 50:50, where styrene can be replaced entirely or to some extent by alpha-methylstyrene,
IV) optionally one or more thermoplastic components T not composed of vinyl monomers; and
V) optionally one or more additives D,
where the process of production of the graft rubbers PI and P-II is completed via coprecipitation of a mixture of the respective emulsions comprising P-I and P-II.

2. Thermoplastic molding composition F according to Claim 1, where:
the graft rubber P-I has been obtained by emulsion polymerization of styrene and acrylonitrile in a ratio by weight of from 80:20 to 65:35 onto the polybutadiene latices A and B;
the graft rubber P-II has been obtained by emulsion polymerization of styrene and acrylonitrile in a ratio by weight of from 80:20 to 65:35 onto the polybutadiene latex C; and/or
the rubber-free copolymer matrix P-III is a styreneacrylonitrile copolymer with a ratio by weight of from 80:20 to 65:35.

3. Thermoplastic molding composition F according to Claim 1 or 2, where the average particle diameter d₅₀ of the polybutadiene latex A is from 240 to 320 nm, in particular from 250 to 310 nm, and gel content of from 30 to 80% by weight, preferably from 40 to 75% by weight, in particular from 45 to 70% by weight.

4. Thermoplastic molding composition F according to any of Claims 1 to 3, where the average particle diameter d₅₀ of the polybutadiene latex B is from 350 to 470 nm, in particular from 360 to 460 nm, and gel content of from 50 to 95% by weight, in particular from 55 to 90% by weight.

5. Thermoplastic molding composition according to any of Claims 1 to 4, where the average particle diameter d₅₀ of the polybutadiene latex C is from 20 to 210 nm, in particular from 30 to 200 nm, and gel content of from 30 to 98% by weight, preferably from 40 to 95% by weight, in particular from 50 to 92% by weight.

6. Thermoplastic molding composition according to any of Claims 1 to 5, where the polybutadiene latices A, B and C are respectively composed of:
from 50 to 100% by weight, preferably from 80 to 100% by weight, in particular from 90 to 99% by weight, of butadiene; and
from 0 to 50% by weight, preferably from 0 to 20% by weight, in particular from 1 to 10% by weight, of butadiene-copolymerizable monomers, preferably monomers selected from the group consisting of styrene, acrylonitrile, isoprene, chloroprene, alpha-methylstyrene, C₁₋₄-alkylstyrenes, C₁₋₈-alkyl acrylates, C₁₋₈-alkyl methacrylates, alkylene glycol diacrylates, alkylene glycol dimethacrylates, divinylbenzene and combinations of two or more of the monomers mentioned, in particular styrene and/or acrylonitrile.

7. Thermoplastic molding composition F according to any of Claims 1 to 6, where the ratio A:B by weight of the solids of the polybutadiene latices is from 90:10 to 10:90, preferably from 80:20 to 20:80, in particular from 60:40 to 40:60.

8. Thermoplastic molding composition F according to any of Claims 1 to 7, where the P-I:P-II ratio by weight of the graft rubbers is from 90:10 to 10:90, preferably from 80:20 to 20:80, in particular from 70:30 to 35:65.

9. Thermoplastic molding composition F according to any of Claims 1 to 8, where the graft rubbers P-I and P-II respectively consist of:
from 15 to 60% by weight, in particular from 20 to 50% by weight, of styrene and acrylonitrile in a ratio by weight of from 95:5 to 50:50, where styrene can be replaced entirely or to some extent by alpha-methylstyrene, and where acrylonitrile can be replaced entirely or to some extent by methyl methacrylate or N-phenylmaleimide; and from 40 to 85% by weight, in particular from 50 to 80% by weight, of the polybutadiene latices.

10. Thermoplastic molding composition F according to any of Claims 1 to 9, where the inorganic persalt initiation respectively comprises addition of one or more salts selected from the group consisting of ammonium persulfate, sodium persulfate, potassium persulfate, potassium perphosphate, sodium perborate and mixtures of two or more thereof, in particular sodium persulfate and/or potassium persulfate.

11. Process for the production of a thermoplastic molding composition F comprising the following steps:
(i) provision of at least one polybutadiene latex C with average particle diameter d₅₀ from 10 to 220 nm;
(ii) production of at least one polybutadiene latex A with average particle diameter d₅₀ from 230 to 330 nm and at least one polybutadiene latex B with average particle diameter d₅₀ from 340 to 480 nm by seed polymerization on the polybutadiene latex C from step (i);
(iii) production of a graft rubber P-I by emulsion polymerization of styrene and acrylonitrile in a ratio by weight of from 95:5 to 50:50, by means of inorganic persalt initiation, where styrene can be replaced entirely or to some extent by alpha-methylstyrene, and where acrylonitrile can be replaced entirely or to some extent by methyl methacrylate or N-phenylmaleimide, in the presence of the polybutadiene latices A and B from step (ii) ;
(iv) production of a graft rubber P-II by emulsion polymerization of styrene and acrylonitrile in a ratio by weight of from 95:5 to 50:50, by means of inorganic persalt initiation, where styrene can be replaced entirely or to some extent by alpha-methylstyrene, and where acrylonitrile can be replaced entirely or to some extent by methyl methacrylate or N-phenylmaleimide, in the presence of the polybutadiene latex C;
(v) mixing of the emulsions made of the graft rubbers P-I and P-II from steps (iii) and (iv) ;
(vi) coprecipitation of the graft rubbers P-I and P-II from the emulsion, from step (v), which comprises these graft rubbers P-I and P-II;
(vii) isolation of the coprecipitated graft rubbers P-I and P-II from step (vi) by filtration or centrifugation;
(viii) drying of the isolated coprecipitated graft rubbers P-I and P-II from step (vii); and
(ix) at from 200 to 300°C, mixing of the dried coprecipitated graft rubbers P-I and P-II from step (viii) with at least one rubber-free copolymer matrix P-III made of styrene and acrylonitrile in a ratio by weight of from 95:5 to 50:50, where styrene can be replaced entirely or to some extent by alpha-methylstyrene.

12. Process according to Claim 11, where the resultant thermoplastic molding composition F has the features according to any of Claims 1 to 10.

13. Process according to Claim 11 or 12, where styrene monomers and acrylonitrile monomers are added continuously to the polybutadiene latices A and B and, respectively, polybutadiene latex C in step (iii) and/or (iv) for production of a graft rubber P-I and/or P-II, preferably where the quantity of the monomers of the monomer feed within the first half of the monomer feed time is from 55 to 90% by weight, more preferably from 60 to 80% by weight, in particular from 65 to 75% by weight.

14. Process according to any of Claims 11 to 13, where the coprecipitation in step (vi) comprises:
a) with simultaneous mixing by stirring, the action of aqueous electrolyte solutions, preferably those comprising:
one or more salts selected from the group consisting of magnesium sulfate, kieserite, pentahydrite, hexahydrite, epsomite (epsom salt), calcium chloride, sodium chloride and mixtures of two or more thereof and/or
one or more acids, in particular sulfuric acid and/or acetic acid;
b) the action of temperatures of from 20 to 150°C, preferably from 40 to 100°C, in particular from 45 to 99°C;
c) the action of shear forces; and/or
d) drying.

15. Molding obtainable from a thermoplastic molding composition F according to any of Claims 1 to 10 or from a thermoplastic molding composition F obtainable by a process of Claims 11 to 14.

## Revendications

1. Matériau de moulage thermoplastique F contenant :
I) au moins un caoutchouc greffé P-I obtenu par polymérisation en émulsion avec initiation par un persel inorganique et polymérisation de styrène et d'acrylonitrile en un rapport en poids styrène:acrylonitrile de 95:5 à 50:50, le styrène pouvant être remplacé en totalité ou en partie par de l'alpha-méthylstyrène, et l'acrylonitrile pouvant être remplacé en totalité ou en partie par du méthacrylate de méthyle ou du N-phénylmaléinimide, en présence de : au moins un latex de polybutadiène A ayant un diamètre de particule moyen d₅₀ de 230 à 330 nm et au moins un latex de polybutadiène B ayant un diamètre de particule moyen d₅₀ de 340 à 480 nm, les latex de polybutadiène A et B ayant été obtenus par polymérisation de germe à partir d'un latex de polybutadiène C ayant un diamètre de particule moyen d₅₀ de 10 à 220 nm (en tant que latex germe) ;
II) au moins un caoutchouc greffé P-II obtenu par polymérisation en émulsion avec initiation par un persel inorganique et polymérisation de styrène et d'acrylonitrile en un rapport en poids styrène:acrylonitrile de 95:5 à 50:50, le styrène pouvant être remplacé en totalité ou en partie par de l'alpha-méthylstyrène, et l'acrylonitrile pouvant être remplacé en totalité ou en partie par du méthacrylate de méthyle ou du N-phénylmaléinimide, en présence du latex de polybutadiène C ayant un diamètre de particule moyen d₅₀ de 10 à 220 nm ;
III) au moins une matrice de copolymère sans caoutchouc P-III à base de styrène et d'acrylonitrile en un rapport en poids styrène:acrylonitrile de 95:5 à 50:50, le styrène pouvant être remplacé en totalité ou en partie par de l'alpha-méthylstyrène,
IV) éventuellement un ou plusieurs composants thermoplastiques T non formés à partir de monomères vinyliques ; et
V) éventuellement un ou plusieurs additifs D,
les caoutchoucs greffés P-I et P-II étant traités par co-précipitation d'un mélange des émulsions respectives contenant P-I et P-II.

2. Matériau de moulage thermoplastique F selon la revendication 1, dans lequel :
le caoutchouc greffé P-I a été obtenu par polymérisation en émulsion de styrène et d'acrylonitrile en un rapport en poids de 80:20 à 65:35 sur les latex de polybutadiène A et B ;
le caoutchouc greffé P-II a été obtenu par polymérisation en émulsion de styrène et d'acrylonitrile en un rapport en poids de 80:20 à 65:35 sur le latex de polybutadiène C ; et/ou
la matrice de copolymère sans caoutchouc P-III est un copolymère de styrène-acrylonitrile en un rapport en poids de 80:20 à 65:35.

3. Matériau de moulage thermoplastique F selon la revendication 1 ou 2, dans lequel le latex de polybutadiène A présente un diamètre de particule moyen d₅₀ de 240 à 320, notamment de 250 à 310 nm, et une teneur en gel de 30 à 80 % en poids, de préférence de 40 à 75 % en poids, notamment de 45 à 70 % en poids.

4. Matériau de moulage thermoplastique F selon l'une quelconque des revendications 1 à 3, dans lequel le latex de polybutadiène B présente un diamètre de particule moyen d₅₀ de 350 à 470, notamment de 360 à 460 nm, et une teneur en gel de 50 à 95 % en poids, notamment de 55 à 90 % en poids.

5. Matériau de moulage thermoplastique selon l'une quelconque des revendications 1 à 4, dans lequel le latex de polybutadiène C présente un diamètre de particule moyen d₅₀ de 20 à 210 nm, notamment de 30 à 200 nm, et une teneur en gel de 30 à 98 % en poids, de préférence de 40 à 95 % en poids, notamment de 50 à 92 % en poids.

6. Matériau de moulage thermoplastique selon l'une quelconque des revendications 1 à 5, dans lequel les latex de polybutadiène A, B et C sont chacun formés à partir de :
50 à 100 % en poids, de préférence 80 à 100 % en poids, notamment 90 à 99 % en poids, de butadiène ; et
0 à 50 % en poids, de préférence 0 à 20 % en poids, notamment 1 à 10 % en poids, de monomères copolymérisables avec le butadiène, de préférence de monomères choisis dans le groupe constitué par le styrène, l'acrylonitrile, l'isoprène, le chloroprène, l'alpha-méthylstyrène, les alkylstyrènes en C₁₋₄, les acrylates d'alkyle en C₁₋₈, les méthacrylates d'alkyle en C₁₋₈, les diacrylates d'alkylène glycol, les diméthacrylates d'alkylène glycol, le divinylbenzène et les combinaisons de deux ou plus des monomères mentionnés, notamment le styrène et/ou l'acrylonitrile.

7. Matériau de moulage thermoplastique F selon l'une quelconque des revendications 1 à 6, dans lequel le rapport en poids entre les solides des latex de polybutadiène A:B est de 90:10 à 10:90, de préférence de 80:20 à 20:80, notamment de 60:40 à 40:60.

8. Matériau de moulage thermoplastique F selon l'une quelconque des revendications 1 à 7, dans lequel le rapport en poids entre les caoutchoucs greffés P-I:P-II est de 90:10 à 10:90, de préférence de 80:20 à 20:80, notamment de 70:30 à 35:65.

9. Matériau de moulage thermoplastique F selon l'une quelconque des revendications 1 à 8, dans lequel les caoutchoucs greffés P-I et P-II sont chacun constitués par :
15 à 60 % en poids, notamment 20 à 50 % en poids, de styrène et d'acrylonitrile en un rapport en poids de 95:5 à 50:50, le styrène pouvant être remplacé en totalité ou en partie par de l'alpha-méthylstyrène, et l'acrylonitrile pouvant être remplacé en totalité ou en partie par du méthacrylate de méthyle ou du N-phénylmaléinimide ; et
40 à 85 % en poids, notamment 50 à 80 % en poids, des latex de polybutadiène.

10. Matériau de moulage thermoplastique F selon l'une quelconque des revendications 1 à 9, dans lequel l'initiation par un persel inorganique comprend à chaque fois l'ajout d'un ou de plusieurs sels choisis dans le groupe constitué par le persulfate d'ammonium, le persulfate de sodium, le persulfate de potassium, le perphosphate de potassium, le perborate de sodium ou les mélanges de deux ou plus d'entre eux, notamment le persulfate de sodium et/ou de potassium.

11. Procédé de fabrication d'un matériau de moulage thermoplastique F comprenant les étapes suivantes :
(i) la préparation d'au moins un latex de polybutadiène C ayant un diamètre de particule moyen d₅₀ de 10 à 220 nm ;
(ii) la fabrication d'au moins un latex de polybutadiène A ayant un diamètre de particule moyen d₅₀ de 230 à 330 nm et d'au moins un latex de polybutadiène B ayant un diamètre de particule moyen d₅₀ de 340 à 480 nm par polymérisation de germe sur le latex de polybutadiène C de l'étape (i) ;
(iii) la fabrication d'un caoutchouc greffé P-I par polymérisation en émulsion réalisée avec initiation par un persel inorganique de styrène et d'acrylonitrile en un rapport en poids de 95:5 à 50:50, le styrène pouvant être remplacé en totalité ou en partie par de l'alphaméthylstyrène, et l'acrylonitrile pouvant être remplacé en totalité ou en partie par du méthacrylate de méthyle ou du N-phénylmaléinimide, en présence des latex de polybutadiène A et B de l'étape (ii) ;
(iv) la fabrication d'un caoutchouc greffé P-II par polymérisation en émulsion réalisée avec initiation par un persel inorganique de styrène et d'acrylonitrile en un rapport en poids de 95:5 à 50:50, le styrène pouvant être remplacé en totalité ou en partie par de l'alphaméthylstyrène, et l'acrylonitrile pouvant être remplacé en totalité ou en partie par du méthacrylate de méthyle ou du N-phénylmaléinimide, en présence du latex de polybutadiène C ;
(v) le mélange des émulsions des caoutchoucs greffés P-I et P-II des étapes (iii) et (iv) ;
(vi) la co-précipitation des caoutchoucs greffés P-I et P-II à partir de l'émulsion de l'étape (v) comprenant ces caoutchoucs greffés P-I et P-II ;
(vii) la séparation des caoutchoucs greffés P-I et P-II co-précipités de l'étape (vi) par filtration ou centrifugation ;
(viii) le séchage des caoutchoucs greffés P-I et P-II co-précipités séparés de l'étape (vii) ; et
(ix) le mélange des caoutchoucs greffés P-I et P-II co-précipités séchés de l'étape (viii) avec au moins une matrice de copolymère sans caoutchouc P-III à base de styrène et d'acrylonitrile en un rapport en poids de 95:5 à 50:50, le styrène pouvant être remplacé en totalité ou en partie par de l'alpha-méthylstyrène, à une température de 200 à 300 °C.

12. Procédé selon la revendication 11, dans lequel le matériau de moulage thermoplastique F fabriqué présente les caractéristiques selon l'une quelconque des revendications 1 à 10.

13. Procédé selon la revendication 11 ou 12, dans lequel, à l'étape (iii) et/ou (iv) de la fabrication d'un caoutchouc greffé P-I et/ou P-II, des monomères de styrène et des monomères d'acrylonitrile sont ajoutés en continu aux latex de polybutadiène A et B ou au latex de polybutadiène C, la masse des monomères de l'alimentation de monomères pendant la première moitié du temps d'alimentation de monomères étant de préférence de 55 à 90 % en poids, de manière davantage préférée de 60 à 80 % en poids, notamment de 65 à 75 % en poids.

14. Procédé selon l'une quelconque des revendications 11 à 13, dans lequel la co-précipitation selon l'étape (vi) comprend :
a) avec mélange simultané par agitation, l'action de solutions aqueuses d'électrolytes, de préférence contenant :
un ou plusieurs sels choisis dans le groupe constitué par le sulfate de magnésium, la kiesérite, la pentahydrite, l'hexahydrite, l'epsomite (sel d'Epsom), le chlorure de calcium, le chlorure de sodium ou les mélanges de deux ou plus d'entre eux, et/ou
un ou plusieurs acides, notamment l'acide sulfurique et/ou l'acide acétique ;
b) l'action de températures de 20 à 150 °C, de préférence de 40 à 100 °C, notamment de 45 à 99 °C ;
c) l'action de forces de pesanteur ; et/ou
d) le séchage.

15. Corps moulé, pouvant être obtenu à partir d'un matériau de moulage thermoplastique F selon l'une quelconque des revendications 1 à 10 ou d'un matériau de moulage thermoplastique F pouvant être obtenu par un procédé selon les revendications 11 à 14.
